# EUROPÄISCHE PATENTSCHRIFT

(11) **EP 2 752 761 B1**
(45) Veröffentlichungstag und Bekanntmachung des Hinweises auf die Patenterteilung: **06.01.2016**
(21) Anmeldenummer: 13150482.1
(22) Anmeldetag: 08.01.2013
(51) Int. Cl.: G06F 3/14, G06F 3/147, G06Q 30/02

(54) **Warenpräsentationssystem**
Merchandise presentation system
Système de présentation de marchandises

(43) Veröffentlichungstag der Anmeldung: 09.07.2014
(73) Patentinhaber: xplace GmbH, 37079 Göttingen (DE)
(72) Erfinder: Wassermann, Marco, 37085 Göttingen (DE)
(74) Vertreter: REHBERG HÜPPE + PARTNER

(56) Entgegenhaltungen:
- WO-A1-98/40816
- WO-A1-2009/106754
- US-A- 4 002 886
- US-A1- 2005 151 701
- US-A1- 2012 151 524
- US-A1- 2012 188 112

## Beschreibung

### TECHNISCHES GEBIET DER ERFINDUNG

Die Erfindung betrifft ein Warenpräsentationssystem mit den Merkmalen des Oberbegriffs des Patentanspruchs 1, das beispielsweise in einem Warenhaus zum Einsatz kommt, um mit einem Bildschirm ausgestattete Waren, insbesondere Fernseher, zu präsentieren. Des Weiteren betrifft die Erfindung ein Verfahren zur Inbetriebnahme eines derartigen Warenpräsentationssystems.

### STAND DER TECHNIK

Zur Präsentation einer Ware in einem Warenhaus ist der Ware üblicherweise ein Schild zugeordnet, dem ein Kunde Warenverkauf-Informationen wie bspw. den Preis, die Warenbezeichnung, Eigenschaften der Ware o. ä. entnehmen kann. Das Schild ist dazu in unmittelbarer Nähe zu der Ware angeordnet. Üblicherweise ist das Schild entweder an der Ware selbst angebracht, z. B. auf die Ware aufgeklebt oder aufgedruckt oder an die Ware angehängt, oder das Schild ist an einer Leiste eines Warenregals, auf dem die Ware ausgestellt ist, angeordnet.

Neben Schildern aus Papier, auf denen die Warenverkauf-Informationen aufgedruckt sind, ist auch der Einsatz von elektronischen Anzeigeeinrichtungen mit einem LCD-Display bekannt, wobei Daten hinsichtlich der Warenverkauf-Informationen in einem Speicher der elektronischen Anzeigeeinrichtung gespeichert sind. Um Warenverkauf-Informationen wie beispielsweise Preisinformationen zu einer Ware zu aktualisieren, muss dann kein neues Schild gedruckt werden. Stattdessen müssen die in dem Speicher der Anzeigeeinrichtung gespeicherten Daten aktualisiert werden. Dazu können die elektronischen Anzeigeeinrichtungen mit einem Server verbunden sein oder werden, der die Daten hinsichtlich der Warenverkauf-Informationen bereitstellt. Die Daten sind dann jeweils mit einer Adresse derjenigen elektronischen Anzeigeeinrichtung codiert, für die die Daten bestimmt sind. Elektronische Anzeigeeinrichtungen, insbesondere elektronische Preisanzeigen, sind z. B. aus den Druckschriften EP 0 299 355 A2, US 5,198,644 A, DE 197 18 002 A1 sowie DE 197 50 821 A1 bekannt.

Unabhängig von der Verwendung eines Schilds aus Papier oder einer elektronischen Anzeigeeinrichtung muss gewährleistet sein, dass ein Kunde die Informationen des Schilds oder der Anzeigeeinrichtung auch der zugehörigen Ware zuordnen kann. Dies kann insbesondere dann schwierig sein, wenn mehrere Waren auf engem Raum präsentiert werden sollen.

Daher wird in WO 09/106754 A1 vorgeschlagen, die Informationen zu Waren in Form von Bildschirmen als "elektronisches Schild" auf dem Bildschirm selbst anzuzeigen. Dabei soll das elektronische Schild zu einem Bildschirm zusammen mit einem Video- bzw. Fernsehsignal, das auf allen Bildschirmen ausgegeben wird, angezeigt werden. Gemäß WO 09/106754 A1 ist dazu ein Bildschirm-Steuergerät vorgesehen, mit dem mehrere Bildschirme einer Gruppe verbunden sind. Das Bildschirm-Steuergerät weist mehrere Speichereinheiten auf, wobei jedem Bildschirm der von dem Bildschirm-Steuergerät angesteuerten Gruppe eine Speichereinheit zugeordnet ist. Das Bildschirm-Steuergerät ist mit einer Verarbeitungseinheit verbunden, die sowohl das Videosignal als auch Signale hinsichtlich der elektronischen Schilder bereitstellt. Zur Inbetriebnahme wird jeder Speichereinheit des Bildschirm-Steuergeräts ein Bildschirm zugeordnet. Die Speichereinheit wird über eine Bildschirm-Kennzeichnung des der Speichereinheit zugeordneten Bildschirms individualisiert. Für eine Inbetriebnahme des aus WO 09/106754 A1 bekannten Warenpräsentationssystems wird zunächst eine Zuordnungs- und Individualisierungsphase durchgeführt. In einer anschließenden Konfigurationsphase sendet die Verarbeitungseinheit nacheinander die Signale hinsichtlich der elektronischen Schilder an das Bildschirm-Steuergerät. Die Signale enthalten dabei neben Daten hinsichtlich des elektronischen Schilds für einen Bildschirm die Bildschirm-Kennzeichnung des zugehörigen Bildschirms. Anhand der in einem Signal enthaltenen Bildschirm-Kennzeichnung wird das Signal derjenigen Speichereinheit zugeordnet, die über diese Bildschirm-Kennzeichnung individualisiert ist. Das in dem Signal enthaltene elektronische Schild wird dann in dieser Speichereinheit gespeichert. Nach Beendigung der Konfigurationsphase wird dem Bildschirm-Steuergerät in der normalen Betriebsphase das Videosignal zugespielt. Das Videosignal wird über einen Verteiler des Bildschirm-Steuergeräts an mehrere Multiplexer des Bildschirm-Steuergeräts weitergegeben. Dabei ist jeder Multiplexer auch mit einer Speichereinheit verbunden, so dass an dem Multiplexer neben dem Videosignal das in der zugehörigen Speichereinheit gespeicherte elektronische Schild bereitgestellt wird. Das Videosignal und das jeweilige elektronische Schild werden über den Multiplexer derart zu einem Bildschirm-Signal überlagert, dass auf dem mit dem Ausgang verbundenen Bildschirm eine Bild angezeigt wird, das dem Videosignal entspricht, wobei (entsprechend den Abmessungen des elektronischen Schilds) ein Feld von Pixeln durch das elektronische Schild ersetzt ist.

EP 1 008 924 A1 betrifft eine nicht gattungsgemäße Vorrichtung zur visuellen Darstellung von Produktinformationen oder amtlichen Mitteilungen. Die Vorrichtung weist einen Flachbildschirm und einen den Flachbildschirm ansteuernden Digitalrechner auf. Die Produktinformationen oder amtlichen Mitteilungen werden von einem zentralen Rechner bereitgestellt und über ein mit dem Digitalrechner verbundenes Modem auf den Digitalrechner übertragen. Hierbei soll es möglich sein, die Produktinformationen oder amtlichen Mitteilungen auf einfache Weise gleichzeitig für mehrere Vorrichtungen bereitzustellen. Wenn die Vorrichtung mit einem Fernsehwandler ausgestattet ist, kann gemäß EP 1 008 924 A1 zusätzlich zu den Produktinformationen oder amtlichen Mitteilungen in einem Teilbereich des Flachbildschirms auch ein Fernsehbild dargestellt werden.

WO 98/40816 A1 betrifft eine Anzeigesteuerung für Displays in Fahrstühlen von verschiedenen Gebäuden, wobei die Anzeige auf den Displays von der Anzeigesteuerung zentral gesteuert wird. Über die Displays werden zum einen allgemeine Informationen, wie Nachrichten, ausgegeben. Zum anderen werden gebäudespezifische Informationen ausgegeben, die jedoch nur von den Displays in dem betreffenden Gebäude ausgegeben werden. Zur Versorgung der Displays mit den Informationen ist jedem Display ein Computer zugeordnet, der mit einem zentralen Server verbunden ist, über welchen die Daten zu den allgemeinen und gebäudespezifischen Informationen übertragen werden. Dabei ist jeder Computer mit einer spezifischen Adresse versehen, über die die Zuordnung der gebäudespezifischen Informationen zu den entsprechenden Displays erfolgen kann.

Aus US 2005/0151701 A1 und US 4,002,886 A sind elektronische Preisschilder bekannt, die an Warenregalen oder ah Waren selbst angebracht sind. Dabei ist jedes Preisschild über eine das elektronische Preisschild individualisierende Adresse gekennzeichnet. Diese wird als StrichCode auf einem Display des elektronischen Preisschilds angezeigt. Bei der Inbetriebnahme eines Preisschilds wird anhand des angezeigten Bar-Codes eine Zuordnungsvorschrift erstellt, über die dem über den Bar-Code identifizierten Preisschild eine Ware zugeordnet wird. Weiterer, nicht gattungsgemäßer Stand der Technik ist aus US 2012/151524 A1 und US 2012/188112 A1 bekannt.

### AUFGABE DER ERFINDUNG

Der Erfindung liegt die Aufgabe zugrunde, ein Warenpräsentationssystem vorzuschlagen, das hinsichtlich seiner Inbetriebnahme und/oder seines normalen Betriebs verbessert ist. Insbesondere soll das Warenpräsentationssystem in Hinblick auf die Zuordnungsmöglichkeiten von allgemeinen Informationen und/oder Warenverkauf-Informationen zu einem Bildschirm einer Ware und/oder dem Aktualisieren von Warenverkaufs-Informationen im Betrieb vereinfacht und/oder verbessert sein. Des Weiteren liegt der Erfindung die Aufgabe zugrunde, ein verbessertes und/oder vereinfachtes Verfahren zur Inbetriebnahme eines Warenpräsentationssystems aufzuzeigen.

### LÖSUNG

Die Aufgabe der Erfindung wird erfindungsgemäß mit den Merkmalen des unabhängigen Patentanspruchs 1 gelöst. Weitere bevorzugte erfindungsgemäße Ausgestaltungen sind den abhängigen Patentansprüchen 2 bis 13 zu entnehmen. Eine weitere Lösung der der Erfindung zugrundeliegenden Aufgabe ist gegeben durch ein Verfahren mit den Merkmalen des Patentanspruchs 14.

### BESCHREIBUNG DER ERFINDUNG

Bekannte Warenrepräsentationssysteme gehen davon aus, dass auf einem Bildschirm einer mit einem Bildschirm ausgestatteten Ware entweder ausschließlich ein Videosignal ausgegeben wird, oder dass, wie in WO 2009/106754 A1 vorgeschlagen, auf mehreren Bildschirmen einer Gruppe von Waren jeweils das gleiche Videosignal ausgegeben wird, dem ein warenspezifisches Warenverkauf-Informationssignal überlagert wird. Das Warenverkauf-Informations-signal der zugehörigen Ware kann zwar individuell über ein Bildschirm-Steuergerät zugeordnet werden. Hingegen ist die Flexibilität hinsichtlich der Zuordnung des Videosignals dadurch eingeschränkt, dass die Waren zu einer Gruppe zusammengefasst sind, wobei die Waren der Gruppe mit dem gleichen Bildschirm-Steuergerät verbunden sind und entsprechend mit dem gleichen Videosignal versorgt werden. Außerdem muss gemäß WO 2009/106754 A1 das Bildschirm-Steuergerät von seinem normalen Betrieb in einen Konfigurationsbetrieb "umgeschaltet" werden, wenn Daten hinsichtlich des Warenverkauf-Informationssignals zu einer Ware aktualisiert werden sollen. Während des Konfigurationsbetriebs muss aber die Ausgabe des Bildschirm-Signals, das sich aus dem Videosignal und dem Warenverkauf-Informationssignal zusammensetzt, unterbrochen werden.

Gemäß einer erfindungsgemäßen Lösung ist das Bildschirm-Steuergerät des Warenpräsentationssystems zum gleichzeitigen Empfang von Daten hinsichtlich des Videosignals und von Daten hinsichtlich mindestens eines Warenverkauf-Informationssignals ausgebildet. Im Sinne der Erfindung ist mit dem Begriff "gleichzeitiger Empfang" nicht ein Empfang von den Daten hinsichtlich des Videosignals und des mindestens einen Warenverkauf-Informationssignals zu exakt demselben Zeitpunkt gemeint. Vielmehr wird unter dem "gleichzeitigen Empfang" auch der Empfang von u. U. aufeinanderfolgenden Datenpaketen, hinsichtlich des Videosignals und des mindestens einen Warenverkauf-Informationssignals, z. B. im Sinne eines "Streaming", verstanden, wobei ein unterbrechungsfreies Erzeugen des Bildschirm-Signals und ein unterbrechungsfreies Versorgen der Ware mit dem Bildschirm-Signal ermöglicht ist. Indem das Bildschirm-Steuergerät die Daten hinsichtlich des Videosignals und die Daten hinsichtlich des Warenverkauf-Informationssignals gleichzeitig empfangen kann, kann eine Änderung der Daten hinsichtlich des Warenverkauf-Informationssignals unmittelbar bei der Erzeugung des Bildschirm-Signals berücksichtigt werden, ohne dass es dabei zu einer Unterbrechung der Ausgabe des Bildschirm-Signals kommt. Insbesondere muss nicht wie bei dem aus WO 2009/106754 A1 bekannten Warenpräsentationssystem eine Konfigurationsphase eingeleitet werden, um eine Änderung hinsichtlich des Warenverkauf-Informationssignals bei der Erzeugung des Bildschirm-Signals zu berücksichtigen, wobei während der Konfigurationsphase nicht das Bildschirm-Signal ausgegeben werden kann. Vielmehr kann erfindungsgemäß eine Aktualisierung der Daten während des Betriebs des Warenpräsentationssystems erfolgen.

Bei dem erfindungsgemäßen Warenverkaufinformationssystem ist das Bildschirm-Steuergerät mit Steuerlogik ausgestattet, welche das Bildschirm-Signal erzeugt, in dem das Videosignal mit dem Warenverkauf-Informationssignal überlagert ist. Das Warenverkauf-Informationssignal, das für die Erzeugung des Bildschirm-Signals verwendet wird, wird dabei entsprechend der an dem Bildschirm-Steuergerät angeschlossenen Ware aus mehreren bereitgestellten Warenverkauf-Informationssignalen ausgewählt. So wird sichergestellt, dass in dem erzeugten Bildschirm-Signal das Warenverkauf-Informationssignal enthalten ist, das der an dem Bildschirm-Steuergerät angeschlossenen Ware zugeordnet ist. Über den Bildschirm der Ware wird somit überlagert zu dem Videosignal das Warenverkauf-Informationssignal ausgegeben, d. h. ein Kunde kann anhand der Ausgabe auf dem Bildschirm der Ware selbst die angezeigten Warenverkauf-Informationen entnehmen. Die Warenverkauf-Informationen können dabei beispielsweise als eine halbtransparente Überlagerung zu einem über das Videosignal übertragenen Video angezeigt werden. Es sind aber auch andere Formen der Überlagerung möglich.

Das Warenpräsentationssystem kann auch mehrere mit einem Bildschirm ausgestattete Waren umfassen. Dabei muss das Bildschirm-Steuergerät des Warenpräsentationssystems gemäß dieser erfindungsgemäßen Lösung nicht zwingend mit einer einzigen mit einem Bildschirm ausgestatteten Ware verbunden sein. Es können vielmehr auch mehrere Waren mit einem einzigen Bildschirm-Steuergerät verbunden sein, wobei von dem Bildschirm-Steuergerät für jede Ware ein Bildschirm-Signal mit dem zugehörigen Warenverkauf-Informationssignal bereitgestellt wird.

Es kann sich bei den Waren beispielsweise um Fernsehgeräte, Bildschirme von Computern, Laptops, Smartphones, Mobiltelefone o. ä. handeln, die in einem Warenhaus zum Verkauf ausgestellt sind. Das Warenverkauf-Informationssignal kann Preisinformationen, Informationen zu einem Lagerbestand, die Warenbezeichnung, Eigenschaften der Ware wie geometrische Abmessungen und/oder eine Auflösung des Bildschirms u. ä. beinhalten. Das Warenverkauf-Informationssignal kann aber auch weitere oder andere Warenverkauf-Informationen betreffen.

Zur Identifizierung des Bildschirm-Steuergeräts ist das Bildschirm-Steuergerät mit einer das Bildschirm-Steuergerät individualisierenden Steuergerät-Kennzeichnung gekennzeichnet. Die Steuergerät-Kennzeichnung kann beispielsweise ein Aufdruck oder ein Schild auf einem Gehäuse des Bildschirm-Steuergeräts sein. Es besteht allerdings die Gefahr, dass der Aufdruck oder das Schild mit der Zeit verblasst oder beschädigt wird und das Bildschirm-Steuergerät daher nicht mehr eindeutig identifiziert werden kann. Um dies zu vermeiden, ist das Bildschirm-Steuergerät des erfindungsgemäßen Warenpräsentationssystems mit Steuerlogik ausgestattet, welche in dem Bildschirm-Signal die das Bildschirm-Steuergerät individualisierende Steuergerät-Kennzeichnung erzeugt. Die Steuergerät-Kennzeichnung kann z. B. zusammen mit dem Videosignal mit dem überlagerten Warenverkauf-Informationssignal auf dem Bildschirm der mit dem Bildschirm-Steuergerät verbundenen Ware ausgegeben werden. Indem die Steuergerät-Kennzeichnung unmittelbar auf dem Bildschirm der mit dem Bildschirm-Steuergerät verbundenen Ware angezeigt wird, kann bei einer Inbetriebnahme des Warenpräsentationssystems auf besonders einfache Weise eine Zuordnung der Ware zu einem Bildschirm-Steuergerät erfolgen, wobei das Fehlerpotential minimiert ist. Beispielsweise kann mittels der Zuordnung festgelegt werden, welches Warenverkauf-Informationssignal von dem Bildschirm-Steuergerät ausgewählt werden soll, so dass dasjenige Warenverkauf-Informationssignal zur Erzeugung des Bildschirm-Signals verwendet wird, welches der mit dem Bildschirm-Steuergerät verbundenen Ware zugeordnet ist.

Die das Bildschirm-Steuergerät individualisierende Steuergerät-Kennzeichnung ist ein Barcode oder QR-Code oder ein Teil hiervon. Der Barcode oder QR-Code kann z. B. mit einem mobilen Gerät wie einem Smartphone eingelesen werden. Die Steuergerät-Kennzeichnung kann dabei automatisiert oder unter Verwendung einer dafür vorgesehenen Anwendung erfasst werden.

Besonders deutlich wird der erfindungsgemäße Vorteil auf Grundlage des folgenden (die Erfindung nicht beschränkenden) Beispiels: Sollen die Preise für einige Waren in Form von Fernsehern aktualisiert werden, während sich die Preise für andere Fernseher nicht ändern sollen, erfordert dieses für den Stand der Technik gemäß WO 2009/106754 A1, dass der normale Betrieb, insbesondere die Präsentation der Fernseher in einem Warenhaus, für sämtliche Fernseher unterbrochen werden muss. Erst nach Beendigung der Konfigurationsphase können dann alle Fernseher wieder in den normalen Betrieb zurückkehren. Hingegen erfolgt erfindungsgemäß im laufenden Betrieb die Aktualisierung der Preise, wobei die Anzeige des Preises der Fernseher mit unveränderten Preisen nicht verändert wird, während die Anzeige des Preises der Fernseher, deren Preis geändert werden soll, "umspringt".

Gemäß einer Ausführungsform des erfindungsgemäßen Warenpräsentationssystems ist das Bildschirm-Steuergerät des Warenpräsentationssystems mit einer einzigen mit einem Bildschirm ausgestatteten Ware verbunden zur individuellen Versorgung der mit dem Bildschirm ausgestatteten Ware mit dem Bildschirm-Signal. Indem ein Bildschirm-Steuergerät nicht mit mehreren Waren, sondern mit einer einzigen Ware verbunden ist, wird ein größeres Maß an Flexibilität erreicht, z. B. hinsichtlich der Zuordnung von verschiedenen Videosignalen zu verschiedenen Waren. Dabei kann der Aufwand hinsichtlich des Bildschirm-Steuergeräts klein gehalten werden, z. B. können die Kosten für das Bildschirm-Steuergerät klein gehalten werden, da das Bildschirm-Steuergerät nur für das Versorgen einer Ware mit dem Bildschirm-Signal ausgelegt sein muss.

Das Warenpräsentationssystem muss nicht zwingend nur eine mit einem Bildschirm ausgestattete Ware umfassen, sondern es kann mehrere mit einem Bildschirm ausgestattete Waren umfassen, die gemeinsam präsentiert werden sollen. Weist das Warenpräsentationssystem zum Beispiel mehrere mit einem Bildschirm ausgestattete Waren wie Fernseher auf, wobei für jede Ware jeweils ein Bildschirm-Steuergerät vorgesehen ist, können die Waren jeweils von den Bildschirm-Steuergeräten mit Bildschirm-Signalen versorgt werden, die jeweils das gleiche Videosignal enthalten. Die von den unterschiedlichen Bildschirm-Steuergeräten bereitgestellten Bildschirm-Signale können jedoch auch jeweils oder in Untergruppen unterteilt unterschiedliche Videosignale enthalten. Möglich ist auch, dass über einen Benutzer, bei welchem es sich um einen Kundenberater oder den Kunden selbst handeln kann, individuell das in dem Bildschirm-Signal enthaltene Videosignal ausgewählt werden kann. Beispielweise kann so an jedem Fernseher ein individueller Fernsehkanal angewählt werden.

In einer besonderen Ausführungsform des Warenpräsentationssystem ist das Bildschirm-Steuergerät an der mit dem Bildschirm ausgestatteten Ware befestigt. Dies ist insbesondere dann vorteilhaft, wenn das Bildschirm-Steuergerät mit einer einzigen mit einem Bildschirm ausgestatteten Ware verbunden ist. Wenn das Bildschirm-Steuergerät unmittelbar an der Ware befestigt ist, kann eine einfache Zuordnung des Bildschirm-Steuergeräts zu der Ware erfolgen. Durch die Befestigung des Bildschirm-Steuergeräts an der Ware können auch etwaige Verbindungsmittel wie Kabel zum Verbinden des Bildschirm-Steuergeräts mit der Ware kurz gehalten werden. Wenn das Warenpräsentationssystem mehrere Waren aufweist, die mit einem gemeinsamen Bildschirm-Steuergerät verbunden sind, kann das Bildschirm-Steuergerät an einer der Waren, die mit dem Bildschirm-Steuergerät verbunden sind, befestigt sein. Vorzugsweise erfolgt die Befestigung des Bildschirm-Steuergeräts auf einer Rückseite der Ware, insbesondere eines Fernsehers, wo dieses für den Kunden nicht sichtbar ist und nicht der Gefahr von Beschädigungen oder Diebstahl ausgesetzt ist.

In einer bevorzugten Ausführungsform weist das Bildschirm-Steuergerät ein Netzwerk- oder Internet-Anschluss auf, über den das Bildschirm-Steuergerät mit Daten hinsichtlich des Videosignals und/oder des Warenverkauf-Informationssignals versorgt werden kann. Der Anschluss kann hierbei auch als ein Kabelanschluss ausgebildet sein. Der Anschluss kann aber auch derart ausgebildet sein, dass dieser einen drahtlosen Empfang der Daten ermöglicht. Dazu kann der Anschluss zum Beispiel als ein WLAN-Anschluss oder als eine Antenne ausgebildet sein.

Insbesondere kann das Bildschirm-Steuergerät einen einzigen Netzwerk- oder Internet-Anschluss aufweisen, über den das Bildschirm-Steuergerät sowohl Daten hinsichtlich des Videosignals als auch des Warenverkauf-Informationssignals empfängt. Gemäß dieser Ausführungsform ist das Bildschirm-Steuergerät mit Steuerlogik ausgestattet, die aus den empfangenen Daten sowohl das Videosignal als auch das Warenverkauf-Informationssignal erzeugt.

Insbesondere wenn die Ware nur schwer zugänglich ist, z. B. weil die Ware weit oben in einem Regal angeordnet ist, kann das Einlesen des Barcodes oder QR-Codes umständlich sein, da dafür das zum Einlesen verwendete Gerät über den Kopf gehoben werden muss und dann in dieser Höhe ausgerichtet werden muss. Daher kann zusätzlich vorgesehen sein, dass das Bildschirm-Steuergerät derart steuerbar ist, dass zumindest temporär die Steuergerät-Kennzeichnung als Ziffernfolge auf dem Bildschirm der Ware angezeigt wird. Das Auslösen dieser temporären Anzeige kann beispielsweise mittels eines Smartphones (ggf. unter Verwendung einer dafür vorgesehenen Applikation) erfolgen. Im einfachsten Fall kann dann der Angestellte des Warenhauses diese Ziffernfolge von dem Bildschirm ablesen und manuell in das Smartphone eingeben. Wenn ein Zuordnen eines Bildschirm-Steuergeräts zu einer Ware erfolgen soll und ein entsprechendes Steuersignal von dem Smartphone an das Bildschirm-Steuergerät und ggf. weitere Bildschirm-Steuergeräte übermittelt wird, wird jedes Bildschirm-Steuergerät dazu veranlasst, für ein vorgegebenes Zeitintervall, z. B. für 10 Sekunden, die Ziffernfolge mit der Steuergerät-Kennzeichnung des Bildschirm-Steuergeräts über den Bildschirm der dem Bildschirm-Steuergerät zugeordneten Ware anzuzeigen. Die Ziffernfolge kann eine Folge von Zahlen und/oder Buchstaben sein. Beispielsweise können die Bildschirm-Steuergeräte in dem Warenhaus "der Reihe nach" durchnumeriert sein. In diesem Fall ist die Ziffernfolge die zugeordnete Zahl des jeweiligen Bildschirm-Steuergeräts.

In einer vorteilhaften Ausführungsform des erfindungsgemäßen Warenpräsentationssystems ist das Bildschirm-Steuergerät mit einem Server verbunden, der Daten hinsichtlich des Videosignals und/oder des Warenverkauf-Informationssignals bereitstellt. Das Bildschirm-Steuergerät kann dabei über den Netzwerk- oder Internet-Anschluss mit dem Server verbunden sein. Insbesondere kann vorgesehen sein, dass nicht nur ein Bildschirm-Steuergerät mit dem Server verbunden ist, sondern mehrere Bildschirm-Steuergeräte mit dem Server verbunden sind und der Server für alle Bildschirm-Steuergeräte Daten hinsichtlich des mindestens einen Videosignals und/oder der Warenverkauf-Informationssignale bereitstellt. Dies ermöglicht auf einfache Weise eine dezentrale Versorgung von einer Vielzahl von Bildschirm-Steuergeräten für eine Vielzahl von Waren, wie es insbesondere für die Präsentation von Waren in einem Warenhaus erforderlich ist.

Wenn über den Server Daten hinsichtlich unterschiedlicher Warenverkauf-Informationssignale bereitgestellt werden, muss sichergestellt werden, dass ein Bildschirm-Steuergerät das der an dem Bildschirm-Steuergerät angeschlossenen Ware zugeordnete Warenverkauf-Informations-signal erkennen und auswählen kann, so dass das richtige Warenverkauf-Informationssignal für die Erzeugung des Bildschirm-Signals verwendet wird. In einer bevorzugten Ausführungsform des erfindungsgemäßen Warenpräsentationssystems weist der Server daher Steuerlogik auf, mittels der die Daten hinsichtlich unterschiedlicher Warenverkauf-Informationssignale derart gekennzeichnet werden, dass das Bildschirm-Steuergerät anhand der Kennzeichnung dasjenige Warenverkauf-Informationssignal auswählen kann, welches der an dem Bildschirm-Steuergerät angeschlossenen Ware zugeordnet ist. Dazu schlägt die Erfindung zwei besondere Ausgestaltungen vor:
- In einer ersten besonderen Ausgestaltung ist der Server mit Steuerlogik ausgestattet, der den Daten hinsichtlich unterschiedlicher Warenverkauf-Informationssignale unterschiedliche Waren-Kennzeichnungen zuordnet. Das Bildschirm-Steuergerät wählt dann diejenigen Daten hinsichtlich des Warenverkauf-Informationssignals aus, welche der Waren-Kennzeichnung der an dem Bildschirm-Steuergerät angeschlossenen Ware zugeordnet sind. Das aus diesen ausgewählten Daten erzeugte Warenverkauf-Informationssignal wird dann für die Erzeugung des Bildschirm-Signals verwendet. Beispielsweise kann dazu die Waren-Kennzeichnung der an dem Bildschirm-Steuergerät angeschlossenen Ware in dem Bildschirm-Steuergerät hinterlegt sein. Das Hinterlegen der Waren-Kennzeichnung kann bei der Inbetriebnahme des Warenpräsentationssystems manuell durchgeführt werden. Die Waren-Kennzeichnung kann aber auch automatisch von der Ware an das Bildschirm-Steuergerät übertragen werden. Z. B. kann die Waren-Kennzeichnung über ein Kabel, über das die Ware mit dem Bildschirm-Steuergerät verbunden ist, an das Bildschirm-Steuergerät übermittelt werden. Die Waren-Kennzeichnung kann dann mit dem Anschließen automatisch dem Bildschirm-Steuergerät zur Verfügung gestellt werden und kann für das Auswählen der Daten hinsichtlich der Warenverkauf-Informationssignale genutzt werden.
- In einer zweiten besonderen Ausgestaltung ordnet die Steuerlogik des Servers den Daten hinsichtlich unterschiedlicher Warenverkauf-Informationssignale unterschiedliche Steuergerät-Kennzeichnungen zu, wobei das Bildschirm-Steuergerät die seiner Steuergerät-Kennzeichnung zugeordneten Daten hinsichtlich des Warenverkauf-Informationssignals auswählt. Aus diesen ausgewählten Daten hinsichtlich des Warenverkauf-Informationssignals wird von dem Bildschirm-Steuergerät das Warenverkauf-Informationssignal erzeugt, welches dann für die Erzeugung des Bildschirm-Signals verwendet wird. Die Zuordnung einer Steuergerät-Kennzeichnung zu Daten hinsichtlich eines Warenverkauf-Informationssignals kann dabei anhand einer auf dem Server hinterlegten Zuordnungsvorschrift erfolgen, die einer Steuergerät-Kennzeichnung eine Waren-Kennzeichnung einer Ware des Warenpräsentationssystems und damit dieser Ware zuordnet.

Zum Übertragen von Daten hinsichtlich der Warenverkauf-Informationssignale auf den Server kann der Server mit einer Datenbank oder einem Warenwirtschaftssystem verbunden sein, in der oder dem die Daten hinsichtlich der Warenverkauf-Informationssignale gespeichert sind. In der Datenbank oder dem Warenwirtschaftssystem können die Daten hinsichtlich der Warenverkauf-Informationssignale jeweils einer Waren-Kennzeichnung zugeordnet sein. Die Waren-Kennzeichnungen können jeweils zusammen mit den zugehörigen Daten auf den Server übertragen werden.

Das Übertragen von Daten hinsichtlich der Warenverkauf-Informationssignale von der Datenbank oder dem Warenwirtschaftssystem auf den Server kann zu vorgegebenen Zeitpunkten erfolgen. Beispielsweise kann das Übertragen der Daten in regelmäßigen zeitlichen Abständen erfolgen. Es kann auch vorgesehen sein, dass die Daten automatisch dann von der Datenbank oder dem Warenwirtschaftssystem auf den Server übertragen werden, wenn eine Änderung der in der Datenbank oder dem Warenwirtschaftssystem gespeicherten Daten erfolgt ist. Über einen automatischen oder zeitnahen Abgleich kann sichergestellt werden, dass das zum Erzeugen des Bildschirm-Signals verwendete Warenverkauf-Informationssignal zumindest zeitnah an die aktuell in der Datenbank oder dem Warenwirtschaftssystem gespeicherten Daten angepasst wird, d. h., dass auf dem Bildschirm zumindest zeitnah die aktuell geltenden Warenverkauf-Informationen angezeigt werden. Möglich ist des Weiteren, dass die Aktualisierung benutzergesteuert erfolgt.

Z. B. um einem Kunden die Ware unter realistischen Betriebsbedingungen, wie sie bei der Verwendung durch den Kunden vorliegen, zu präsentieren, ist es wünschenswert, wenn das Bildschirm-Signal zumindest zeitweise ausschließlich das Videosignal ohne Überlagerung des Warenverkauf-Informationssignals ist. Daher ist in einer besonderen Ausführungsform des erfindungsgemäßen Warenpräsentationssystems vorgesehen, dass das Bildschirm-Steuergerät zumindest vorübergehend in einen Betriebszustand schaltbar ist, in dem das Bildschirm-Signal ausschließlich das Videosignal ist. Das Bildschirm-Steuergerät kann manuell oder automatisch nach einer vorgegeben Zeitspanne wieder in den Betriebszustand zurückkehren, in dem in dem Bildschirm-Signal das Videosignal überlagert mit dem Warenverkauf-Informationssignal und ggf. mit der Waren-Kennzeichnung ist. Zum Umschalten kann das Bildschirm-Steuergerät einen Schalter aufweisen. Wenn das Bildschirm-Steuergerät eine Schnittstelle aufweist, über die es ein Umschaltsignal empfangen kann, kann der Betriebszustand des Bildschirm-Steuergeräts ferngesteuert umgeschaltet werden. Das Fernsteuern kann über eine dem Bildschirm-Steuergerät zugeordnete Fernsteuerung erfolgen. Es kann aber auch vorgesehen sein, dass eine Verbindung zwischen einem Smartphone und dem Bildschirm-Steuergerät aufgebaut werden kann und die Schnittstelle zum Empfang eines Umschaltsignals von dem Smartphone ausgebildet ist. Wenn zum Umschalten eine spezielle Anwendung oder Berichtigung erforderlich ist, kann das Umschalten u. U. nur von einem Kundenberater mit einem Smartphone mit der entsprechenden Anwendung oder Berechtigung durchgeführt werden. Die Kommunikation mit der Schnittstelle des Bildschirm-Steuergeräts kann aber auch für ein Smartphone eines Kunden ermöglicht sein, so dass der Kunde selbst das Bildschirm-Steuergerät in den Betriebszustand schalten kann, in dem das Bildschirm-Signal ausschließlich das Videosignal ist.

In weiterer Ausgestaltung der Erfindung kann vorgesehen sein, dass das Bildschirm-Steuergerät mit Steuerlogik ausgestattet ist, welche dem Videosignal eine Anzahl der zum Verkauf verfügbaren Waren überlagert. So kann ein Kunde oder ein Kundenberater dem Bildschirm-Signal unmittelbar entnehmen, ob die Ware derzeit verfügbar ist oder ob Waren nachbestellt werden müssen. Die dazu erforderlichen Informationen können in einem Warenwirtschaftssystem hinterlegt sein, das diese Informationen als Daten hinsichtlich der Warenverkauf-Informationssignale auf den Server überträgt, welcher diese Daten wiederum dem Bildschirm-Steuergerät bereitstellt.

Die Steuerlogik kann dem Videosignal alternativ oder kumulativ auch einen Internet-Link zu einer Website für ein Online-Verkaufsportal und/oder ein Internet-Link zu einer Kommunikationsplattform überlagern. Dieser Internet-Link kann zum Beispiel in ein Smartphone eingegeben oder mittels eines Smartphones eingelesen werden. Der Kunde kann nach dem Einlesen oder Eingeben des Internet-Links über sein Smartphone einen Internetkauf der Ware abschließen oder auf einer Kommunikationsplattform auf die Ware hinweisen. Es können dem Videosignal auch Informationen zu einem Kommunikationsaufbau zu einem Smartphone überlagert werden. Durch Einlesen der auf dem Bildschirm angezeigten Informationen mit dem Smartphone oder Eingeben der Informationen in das Smartphone können beispielsweise die auf dem Bildschirm angezeigten Informationen an das Smartphone übermittelt werden.

Insbesondere kann auch vorgesehen sein, dass das Bildschirm-Steuergerät über Steuerlogik verfügt, welche dem Videosignal einen QR-Code überlagert, dem zumindest zwei Funktionen zugeordnet sind:
- Einerseits beinhaltet der QR-Code einen Internet-Link zu einer Website für ein Online-Verkaufsportal, einen Internet-Link zu einer Kommunikationsplattform und/oder Informationen zu einem Kommunikationsaufbau zu einem Smartphone.
- Andererseits beinhaltet der QR-Code auch die das Bildschirm-Steuergerät individualisierende Steuergerät-Kennzeichnung.

Welcher der Inhalte des QR-Codes beim Einlesen mit einem Smartphone oder einem anderen Gerät erfasst wird, kann beispielsweise davon abhängen, ob auf dem Smartphone oder dem Gerät eine entsprechende Anwendung genutzt wird. Für die Verwendung in einem Warenhaus ist es z. B. vorteilhaft, dass eine besondere, nur den Angestellten zugängliche Anwendung genutzt werden muss, um über den QR-Code die Steuergerät-Kennzeichnung erfassen zu können. Wird der QR-Code hingegen von einem Kunden mit seinem Smartphone eingelesen, das nicht mit der entsprechenden Anwendung ausgestattet ist, wird aus dem QR-Code nur der Internet-Link und/oder die Information zu einem Kommunikationsaufbau erfasst.

Eine weitere erfindungsgemäße Lösung betrifft ein Verfahren zur Inbetriebnahme eines Warenpräsentationssystems. Bei dem Verfahren wird zunächst ein Bildschirm-Steuergerät des Warenpräsentationssystems mit einer mit einem Bildschirm ausgestatteten Ware verbunden. An dem Bildschirm der Ware, die mit dem Bildschirm-Steuergerät verbunden ist, wird nach dem Verbinden eine das Bildschirm-Steuergerät individualisierende Steuergerät-Kennzeichnung angezeigt, welche ein Barcode oder ein QR-Code ist. Um die Ware dem Bildschirm-Steuergerät, mit dem die Ware verbunden ist, zuzuordnen, wird sowohl die das Bildschirm-Steuergerät individualisierende Steuergerät-Kennzeichnung als auch eine die Ware individualisierende Waren-Kennzeichnung erfasst. Die Steuergerät-Kennzeichnung und/oder die Waren-Kennzeichnung können beispielsweise mit einem Smartphone automatisiert erfasst werden, das eine Einlesesoftware zum Einlesen der Steuergerät-Kennzeichnung und/oder der Waren-Kennzeichnung aufweist. Die Steuergerät-Kennzeichnung und/oder die Waren-Kennzeichnung können aber auch über eine Tastatur des Smartphones eingegeben werden.

Damit sichergestellt wird, dass zum Erzeugen des Bildschirm-Signals ein Warenverkauf-Informationssignal verwendet wird, das der an dem Bildschirm-Steuergerät angeschlossenen Ware zugeordnet ist, schlägt das erfindungsgemäße Verfahren zwei alternative Wege vor:
- Zum einen kann die die Ware individualisierende Waren-Kennzeichnung an das über die Steuergerät-Kennzeichnung identifizierte Bildschirm-Steuergerät übermittelt werden. Von dem Bildschirm-Steuergerät wird dann das Bildschirm-Signal erzeugt, in dem ein Videosignal mit einem Warenverkauf-Informationssignal überlagert ist, wobei das Warenverkauf-Informationssignal von der übermittelten, die Ware individualisierenden Waren-Kennzeichnung abhängig ist.
- Zum anderen kann auf Basis der erfassten Waren-Kennzeichnung und der erfassten Steuergerät-Kennzeichnung eine Zuordnungsvorschrift erstellt werden, die eine Steuergerät-Kennzeichnung einer Waren-Kennzeichnung zuordnet. Anhand der Zuordnungsvorschrift werden die Daten hinsichtlich des Warenverkauf-Informationssignals mit einer Steuergerät-Kennzeichnung gekennzeichnet. Durch das Bildschirm-Steuergerät wird dann aus den mit der zugehörigen Steuergerät-Kennzeichnung gekennzeichneten Daten hinsichtlich des Warenverkauf-Informationssignals ein Warenverkauf-Informationssignal erzeugt. Schließlich wird von dem Bildschirm-Steuergerät ein Bildschirm-Signal erzeugt, in welchem ein Videosignal mit dem erzeugten Warenverkauf-Informationssignal überlagert ist. Die Zuordnungsvorschrift kann dabei beispielsweise auf einem Server hinterlegt sein, über den die Daten hinsichtlich des Warenverkauf-Informationssignals für das Bildschirm-Steuergerät bereitgestellt werden. Der Server kann dabei mit einer geeigneten Steuerlogik ausgestattet sein, mittels der die Daten hinsichtlich des Warenverkauf-Informationssignals mit einer Steuergerät-Kennzeichnung gekennzeichnet werden.

Im Rahmen der Erfindung kann ein Bildschirm-Steuergerät mit Steuerlogik zur Erzeugung eines Bildschirm-Signals verwendet werden. In dem Bildschirm-Signal ist ein Videosignal mit einem Warenverkauf-Informationssignal überlagert für eine individuelle Versorgung einer einzigen mit einem Bildschirm ausgestatteten Ware mit dem Bildschirm-Signal. Mit dem Begriff "individuelle Versorgung" ist insbesondere auch keine verzweigte Versorgung gemeint, beispielsweise durch ein Hintereinanderschalten von mehreren Bildschirm-Steuergeräten, bei denen jeweils nur das letzte Bildschirm-Steuergerät in der Reihe mit einer einzigen mit einem Bildschirm ausgestatteten Ware verbunden ist.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichterverständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein Warenpräsentationssystem.
- **Fig. 2**: zeigt stark schematisiert eine Ausgabe eines Bildschirm-Signals an einer zugeordneten mit einem Bildschirm ausgestatteten Ware eines Warenpräsentationssystems.
- **Fig. 3**: zeigt ein schematisiertes Blockschaltbild für eine Inbetriebnahme und einen Betrieb eines Warenpräsentationssystems.
- **Fig. 4**: zeigt ein schematisiertes Blockschaltbild für eine alternative Inbetriebnahme und einen alternativen Betrieb eines Warenpräsentationssystems.

### FIGURENBESCHREIBUNG

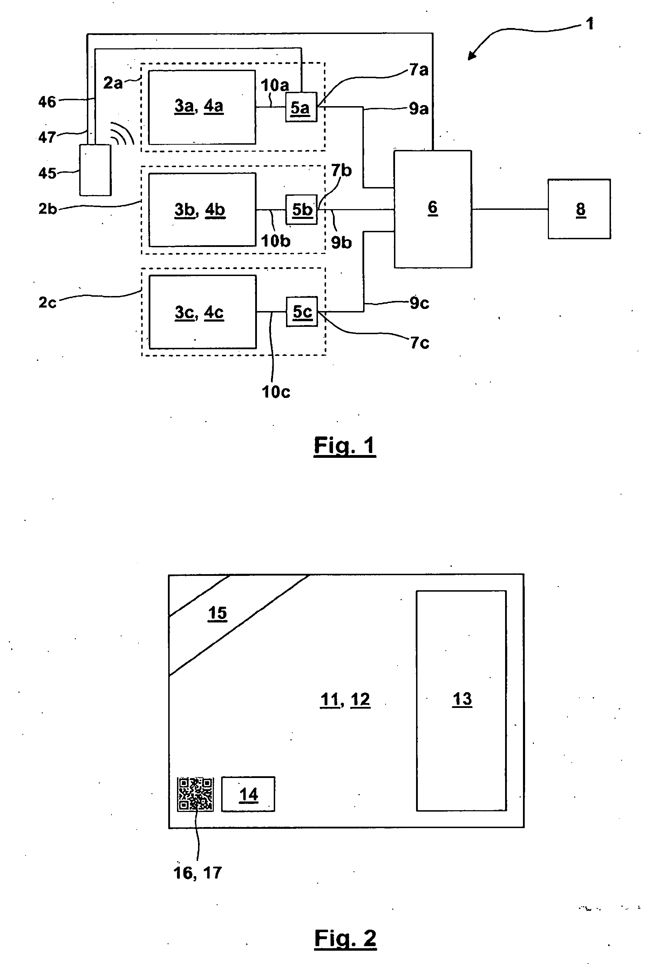

**Fig. 1** zeigt ein Warenpräsentationssystem 1 mit einer Gruppe von Warenpräsentationseinheiten 2a, 2b, 2c. Im Folgenden wird die Erfindung, ohne dass die Erfindung hierdurch auf dieses Beispiel eingeschränkt sein soll, anhand des folgenden Beispiels erläutert: Das Warenpräsentationssystem 1 wird in einem Warenhaus zur Präsentation von Waren 3a, 3b, 3c in Form von Fernsehern 4a, 4b, 4c eingesetzt. Die Fernseher 4a, 4b, 4c sollen dabei ein Bildschirm-Signal ausgeben, in dem als Videosignal ein Fernsehkanalsignal und als Warenverkauf-Informationen bspw. Preise der Fernseher 4a, 4b, 4c enthalten sind. So muss den Fernsehern 4a, 4b, 4c kein separates Schild zugeordnet werden, sondern ein Kunde kann den von den Fernsehern 4a, 4b, 4c ausgegebenen Bildschirm-Signalen selbst die Preise der Fernseher 4a, 4b, 4c entnehmen. Gleichzeitig kann der Kunde einen Eindruck von dem Fernseher 4a, 4b, 4c in ihrem Betrieb zur Ausgabe des Fernsehkanalsignals, bspw. hinsichtlich der optischen Wiedergabequalität oder hinsichtlich des Designs des Fernsehers 4a, 4b, 4c selbst, gewinnen.

Zum Versorgen der Fernseher 4a, 4b, 4c mit dem Bildschirm-Signal sind die Fernseher 4a, 4b, 4c mit Bildschirm-Steuergeräten 5a, 5b, 5c verbunden. Die Bildschirm-Steuergeräte 5a, 5b, 5c bilden mit den Fernsehern 4a, 4b, 4c jeweils Warenpräsentationseinheiten 2a, 2b, 2c. Bei dem in Fig. 1 dargestellten Beispiel ist jedem Bildschirm-Steuergerät 5a, 5b, 5c ein einziger Fernseher 4a, 4b, 4c zugeordnet. So kann jeder Fernseher 4a, 4b, 4c individuell mit dem von dem jeweiligen Bildschirm-Steuergerät 5a, 5b, 5c bereitgestellten Bildschirm-Signal versorgt werden, was insbesondere dazu genutzt werden kann, dass an den unterschiedlichen Fernsehern 4a, 4b, 4c Bildschirm-Signale mit unterschiedlichen Fernsehkanalsignalen und/oder Warenverkauf-Informationen angezeigt werden können.

Die Bildschirm-Steuergeräte 5a, 5b, 5c sind mit einem Server 6 verbunden, der das Fernsehkanalsignal sowie die Warenverkauf-Informationssignale für die Fernseher 4a, 4b, 4c und ggf. weitere Warenverkauf-Informationssignale für weitere, hier nicht dargestellte Waren bereitstellt. Die Verbindung der Warenpräsentationseinheiten 2a, 2b, 2c mit dem Server erfolgt vorzugsweise über Netzwerk oder Internet-Anschlüsse 7a, 7b, 7c der Warenpräsentationseinheiten 2a, 2b, 2c. Durch die Steuerlogik der Bildschirm-Steuergeräte 5a, 5b, 5c werden aus den von dem Server 6 empfangenen Daten das Fernsehkanalsignal und die Warenverkauf-Informationssignale generiert.

Damit von jedem Fernseher 4a, 4b, 4c nur der dem jeweiligen Fernseher 4a, 4b, 4c zugeordnete Preis ausgegeben wird, wählt jedes Bildschirm-Steuergerät 5a, 5b, 5c aus den bereitgestellten Warenverkauf-Informationssignalen jeweils das Warenverkauf-Informationssignal aus, welches dem an dem Bildschirm-Steuergerät 5a, 5b, 5c angeschlossenen Fernseher 4a, 4b, 4c zugeordnet ist. Beispielsweise wird von dem Bildschirm-Steuergerät 5a, das mit dem Fernseher 4a verbunden ist, aus den Warenverkauf-Informationssignalen dasjenige Warenverkauf-Informationssignal ausgewählt, das dem Fernseher 4a zugeordnet ist. Es kann auch vorgesehen sein, dass das Bildschirm-Steuergerät 5a aus den von dem Server 6 empfangenen Daten hinsichtlich der Warenverkauf-Informationssignale die Daten hinsichtlich des Warenverkauf-Informationssignals für den Fernseher 4a auswählt und die Steuerlogik des Bildschirm-Steuergeräts 5a nur aus den ausgewählten Daten das dem Fernseher 4a zugeordnete Warenverkauf-Informationssignal erzeugt. Nach dem Auswählen wird aus dem dem Fernseher 4a zugeordneten Warenverkauf-Informationssignal und dem Fernsehkanalsignal das Bildschirm-Signal für den Fernseher 4a erzeugt. Die Warenverkauf-Informationssignale, die den Fernsehern 4b oder 4c zugeordnet sind, werden für das Erzeugen des Bildschirm-Signals für den Fernseher 4a hingegen nicht berücksichtigt. Gleichermaßen enthält das von dem Bildschirm-Steuergerät 5b bzw. 5c erzeugte Bildschirm-Signal den dem Fernseher 4b bzw. 4c zugeordneten Preis. Die Bildschirm-Steuergeräte 5a, 5b, 5c wirken als eine Art Filter für die von dem Server 6 bereitgestellten Daten hinsichtlich der Warenverkauf-Informations-signale: Von jedem Bildschirm-Steuergerät 5a, 5b, 5c werden jeweils nur die Warenverkauf-Informationssignale, die den jeweils angeschlossenen Fernsehern 4a, 4b, 4c zugeordnet sind, zu dem Bildschirm-Signal weiterverarbeitet und als Bildschirm-Signal an den zugehörigen Fernseher 4a, 4b, 4c weitergeleitet.

In Bezug auf die von dem Server 6 bereitgestellten Daten hinsichtlich des Fernsehkanalsignals wirken die Bildschirm-Steuergeräte 5a, 5b, 5c grundsätzlich nicht als Filter. Vielmehr werden die von dem Server 6 empfangen Daten hinsichtlich des Fernsehkanalsignals von jedem Bildschirm-Steuergerät 5a, 5b, 5c ohne Selektion zu dem Bildschirm-Signal weiterverarbeitet und in Form des Bildschirm-Signals an den mit dem Bildschirm-Steuergerät 5a, 5b, 5c verbundenen Fernseher 4a, 4b, 4c weitergeleitet. Wenn von dem Server 6 für jedes Bildschirm-Steuergerät 5a, 5b, 5c die gleichen Daten hinsichtlich des Fernsehkanalsignals bereitgestellt werden, enthält jedes der von den Bildschirm-Steuergeräten 5a, 5b, 5c erzeugten Bildschirm-Signale das gleiche Fernsehkanalsignal.

Es können aber von dem Server 6 auch Daten hinsichtlich verschiedener Fernsehkanalsignale für die Bildschirm-Steuergeräte 5a, 5b, 5c bereitgestellt werden, wobei dann über das Bildschirm-Steuergerät 5a, 5b, 5c das an dem zugeordneten Fernseher 4a, 4b, 4c anzuzeigende Fernsehkanalsignal ausgewählt wird. Indem bei dem in Fig. 1 dargestellten Beispiel jedes Bildschirm-Steuergerät 5a, 5b, 5c mit einem einzigen Fernseher 4a, 4b, 4c verbunden ist, kann dann eine individuelle Versorgung der Fernseher 4a, 4b, 4c mit dem von dem zugehörigen Bildschirm-Steuergerät 5a, 5b, 5c erzeugten Bildschirm-Signal erfolgen, d. h. die Bildschirm-Signale für die Fernseher 4a, 4b, 4c können unterschiedliche Fernsehkanalsignale enthalten.

Der Server 6 ist mit einem Warenwirtschaftssystem 8 verbunden, von dem die Daten hinsichtlich der Warenverkauf-Informationssignale auf den Server 6 übertragen werden. In dem Warenwirtschaftssystem 8 sind z. B. die Preise der Fernseher 4a, 4b, 4c und ggf. die Preise weiterer in Fig. 1 nicht dargestellter Waren sowie weitere Informationen zu den Fernsehern 4a, 4b, 4c wie eine Bezeichnung der Fernseher 4a, 4b, 4c, deren geometrische Abmessungen, deren Auflösungen, deren Gerätetypen, die Bildschirmdiagonalen, die Energieeffizienzklassen, ein etwaigen Hinweis auf "HD-Ready", die Artikel-Nrn., die Bildverhältnisse, die dynamischen Kontrastverhältnisse, die Bildwiederholfrequenzen, Hinweise auf ein etwaiges vorhandenes Bildverbesserungs- oder Bildbearbeitungssystem u. ä. hinterlegt. Es können aber auch andere oder weitere Daten hinsichtlich der Warenverkauf-Informationssignale in dem Warenwirtschaftssystem 8 hinterlegt sein.

Um zu gewährleisten, dass nach einer Aktualisierung von Daten des Warenwirtschaftssystems 8 zeitnah die aktuell in dem Warenwirtschaftssystem 8 hinterlegten Warenverkauf-Informationen auf den Fernsehern 4a, 4b, 4c angezeigt werden, kann vorgesehen sein, dass alle oder zumindest die aktualisierten Daten automatisch von dem Warenwirtschaftssystem 8 auf den Server 6 übertragen werden. Die Aktualisierung kann hierbei bspw. ausgelöst werden mit der Vornahme der Änderung in dem Warenwirtschaftssystem 8, nach vorgegebenen Zeitspannen oder durch manuelle Auslösung. Die aktualisierten Daten werden dann automatisch von dem Server 5 für die Bildschirm-Steuergeräte 5a, 5b, 5c bereitgestellt, so dass diese aktuellen Daten zeitnah für die Erzeugung der Bildschirm-Signale für die Fernseher 4a, 4b, 4c berücksichtigt werden können.

Bei dem in Fig. 1 dargestellten Warenpräsentationssystem 1 erfolgt die Übertragung der Daten hinsichtlich des Fernsehkanalsignals sowie der Warenverkauf-Informationssignale von dem Server 6 zu den Bildschirm-Steuergeräten 5a, 5b, 5c nicht drahtlos. Vielmehr sind die Bildschirm-Steuergeräte 5a, 5b, 5c über die Netzwerk- oder Internet-Anschlüsse 7a, 7b, 7c und Kabel 9a, 9b, 9c wie zum Beispiel Ethernetkabel mit dem Server 6 verbunden sein. Alternativ zu dem in Fig. 1 dargestellten Beispiel können die Bildschirm-Steuergeräte 5a, 5b, 5c aber auch mit einer Antenne oder einem WLAN-Anschluss ausgebildet sein, die einen drahtlosen Empfang der Daten ermöglichen. Dann kann auf besonders einfache Weise die Versorgung einer Vielzahl von Bildschirm-Steuergeräten 5a, 5b, 5c mit den Daten hinsichtlich des Fernsehkanalsignals und der Warenverkauf-Informationssignale gewährleistet werden.

Zum Übertragen der Bildschirm-Signale von den Bildschirm-Steuergeräten 5a, 5b, 5c zu den Fernsehern 4a, 4b, 4c ist jedes Bildschirm-Steuergerät 5a, 5b, 5c über ein Kabel 10a, 10b, 10c, welches zur Übertragung eines Bildsignals geeignet ist, mit dem zugehörigen Fernseher 4a, 4b, 4c verbunden. Beispielsweise können die Kabel 10a, 10b, 10c HDMI-Kabel sein. Anders als bei dem in Fig. 1 gezeigten Beispiel kann jedes Bildschirm-Steuergerät 5a, 5b, 5c zusätzlich einen Netzwerkanschluss aufweisen, der über ein Netzwerkkabel mit einem entsprechenden Netzwerkanschluss des zugehörigen Fernsehers 4a, 4b, 4c verbunden werden kann. Dann können die Fernseher 4a, 4b, 4c über die Bildschirm-Steuergeräte 5a, 5b, 5c in ein Netzwerk eingebunden werden.

Über ein Smartphone 45 kann z. B. durch Erfassen einer Steuergerät-Kennzeichnung, die das mit dem Fernseher 4a, 4b, 4c verbundene Bildschirm-Steuergerät 5a, 5b, 5c individualisiert, eine Verbindung 46 mit dem zugehörigen Bildschirm-Steuergerät 5a, 5b, 5c aufgebaut werden. Dies kann automatisch, z. B. durch Einlesen eines die Steuergerät-Kennzeichnungen beinhaltenden QR-Codes mit dem Smartphone 45, oder manuell, z. B. durch Eingeben einer Ziffernfolge mit der Steuergerät-Kennzeichnung in das Smartphone 45, erfolgen. Es kann auch vorgesehen sein, dass unter Nutzung einer speziellen Anwendung des Smartphones 45 automatisch die Verbindung 46 zu einem der oder zu allen der Bildschirm-Steuergeräte 5a, 5b, 5c aufgebaut wird. Alternativ oder kumulativ kann auch eine Verbindung 47 des Smartphones 45 mit dem Server 6 aufgebaut werden. Die Verbindungen 46, 47 des Smartphones 45 mit dem Bildschirm-Steuergerät 5a, 5b, 5c und/oder dem Server 6 können beispielsweise WLAN-Verbindungen sein.

**Fig. 2** zeigt stark schematisiert ein Beispiel für ein Bildschirmsignal 11, das von dem Fernseher 4a der Warenpräsentationseinheit 2a gemäß Fig. 1 ausgegeben wird. In dem Bildschirm-Signal 11 ist ein Videosignal 12, welches vorzugsweise an sich den Bildschirm vollständig (oder auch nur teilweise) ausfüllt, mit Warenverkauf-Informationssignalen 13, 14, 15 überlagert. Das Warenverkauf-Informationssignal 13 beinhaltet z. B. Informationen des Warenwirtschaftssystems 8 zu dem zugeordneten Fernseher 4a wie eine Preisinformation, die Bezeichnung des Fernsehers 4a, seine geometrischen Abmessungen, eine Auflösung des Fernsehers 4a o. ä. Das Warenverkauf-Informationssignal 14 kann auch eine Kundenbewertung des Fernsehers 4a beinhalten. Das Warenverkauf-Informationssignal 15 kann auch einen Hinweis darauf enthalten, dass es sich bei dem angebotenen Fernseher 4a um eine Aktion bzw. ein Sonderangebot handelt. Neben den Warenverkauf-Informationssignalen 13, 14, 15 können dem Videosignal 12 aber auch weitere oder andere Warenverkauf-Informationssignale (s. o. zu möglichen Informationen des Warenwirtschaftssystems 8) überlagert sein.

Zusätzlich zu dem Videosignal 12 und den dazu überlagerten Warenverkauf-Informationssignalen 13, 14, 15 enthält das von dem Fernseher 4a ausgegebene Bildschirm-Signal 11 einen QR-Code 16. Der QR-Code 16 eine Steuergerät-Kennzeichnung 17 beinhaltet, die das mit dem Fernseher 4a verbundene Bildschirm-Steuergerät 5a kennzeichnet. Durch Einlesen und Entschlüsseln des QR-Codes 16 kann dann automatisch erfasst werden, dass der Fernseher 4a mit dem Bildschirm-Steuergerät 5a verbunden ist, d. h. über den QR-Code 16 mit der darin enthaltenen Steuergerät-Kennzeichnung 17 kann eine Identifikation des Bildschirm-Steuergeräts 5a über den Fernseher 4a erfolgen. Beispielsweise kann nach dem Erfassen der Steuergerät-Kennzeichnung 17 automatisch über den Server 6 oder unmittelbar mit dem Bildschirm-Steuergerät 5a die Verbindung 46 zu dem Bildschirm-Steuergerät 5a aufgebaut werden. Nach dem Aufbau der Verbindung 46 mit dem Bildschirm-Steuergerät 5a kann dann eine Waren-Kennzeichnung, die den spezifischen Fernsehers 4a eindeutig kennzeichnet, in das Smartphone 45 eingegeben oder automatisiert mit dem Smartphone 45 erfasst werden. Die Waren-Kennzeichnung wird dann an das Bildschirm-Steuergerät 5a übertragen und in diesem gespeichert. Anhand der so in dem Bildschirm-Steuergerät 5a hinterlegten Waren-Kennzeichnung können dann die Warenverkauf-Informationssignale 13, 14, 15, welche dem Fernseher 4a zugeordnet sind, aus den von dem Server 6 bereitgestellten Daten hinsichtlich der Warenverkauf-Informationssignale für die Fernseher 4a, 4b, 4c ausgewählt werden.

Um ein missbräuchliche Verwendung zu vermeiden, kann vorgesehen sein, dass die in dem QR-Code 16 enthaltene Steuergerät-Kennzeichnung 17 nur unter Verwendung einer speziellen Anwendung, die z. B. nur Angestellten des Warenhauses zugänglich ist, erfasst werden kann.

Wird der QR-Code 16 hingegen von einem Kunden mit seinem Smartphone 45 erfasst, das nicht die Anwendung zum Erfassen der Steuergerät-Kennzeichnung 17 aufweist, können über den QR-Code 16 andere Inhalte übermittelt werden. Der QR-Code 16 kann somit gleichzeitig mehrere (alternative oder kumulative) Funktionen haben:
- Der QR-Code 16 kann bspw. einen Internet-Link zu einer Website für ein Online-Verkaufsportal beinhalten. Wird der QR-Code 16 mit einem Smartphone 45 eines Kunden eingelesen, wird automatisch eine Verbindung mit der Website für das Online-Verkaufsportal aufgebaut. Der Kunde kann dann über das Online-Verkaufsportal einen Internetkauf über den Fernseher 4a abschließen. Hierzu kann gemäß einer Weiterbildung in dem QR-Code 16 auch die Waren-Kennzeichnung enthalten sein. Wird diese ebenfalls von dem Smartphone 45 erfasst, kann in dem Online-Verkaufsportal unmittelbar die dem Fernseher 4a, welcher der Waren-Kennzeichnung zugeordnet ist, zugeordnete Verkaufsseite angezeigt werden.
- Der QR-Code 16 kann bspw. auch einen Internetlink zu einer Kommunikationsplattform beinhalten, auf der der Kunde seine Bewertung zu dem Fernseher 4a abgeben kann. Die von dem Kunden abgegebene Bewertung kann unmittelbar oder zumindest zeitnah eine Änderung des in dem Bildschirm-Signal 11 enthaltenen Warenverkauf-Informationssignals 14 zur Folge haben: Enthält das Warenverkauf-Informationssignal 14 z. B. eine Anzahl von Kunden, denen der Fernseher 4a gefallen hat und gibt der Kunde bei der der Kommunikationsplattform an, dass ihm der Fernseher 4a gefällt, erhöht sich die in dem Warenverkauf-Informationssignal 14 enthaltene, über den Fernseher 4a angezeigte Anzahl um eins.
- Weiterhin kann der QR-Code 16 auch zum Aufbau der Verbindung 46 des Smartphones 45 mit dem Bildschirm-Steuergerät 5a dienen. Beispielsweise kann das Bildschirm-Steuergerät 5a über die Verbindung 46 ferngesteuert in einen Betriebszustand umgeschaltet werden, in dem das von dem Bildschirm-Steuergerät 5a erzeugte Bildschirm-Signal 11 ausschließlich das Videosignal 12 ist ohne Überlagerung der Warenverkauf-Informationssignale 13, 14, 15. Auch möglich ist die Veränderung des Fernsehkanals, dessen Fernsehkanalsignal ausgewählt wird.

Alternativ zu der Ausgabe der Internet-Links oder der Informationen zum Kommunikationsaufbau über den QR-Code 16 können diese dem Videosignal 12 als weitere Warenverkauf-Informationssignale überlagert sein.

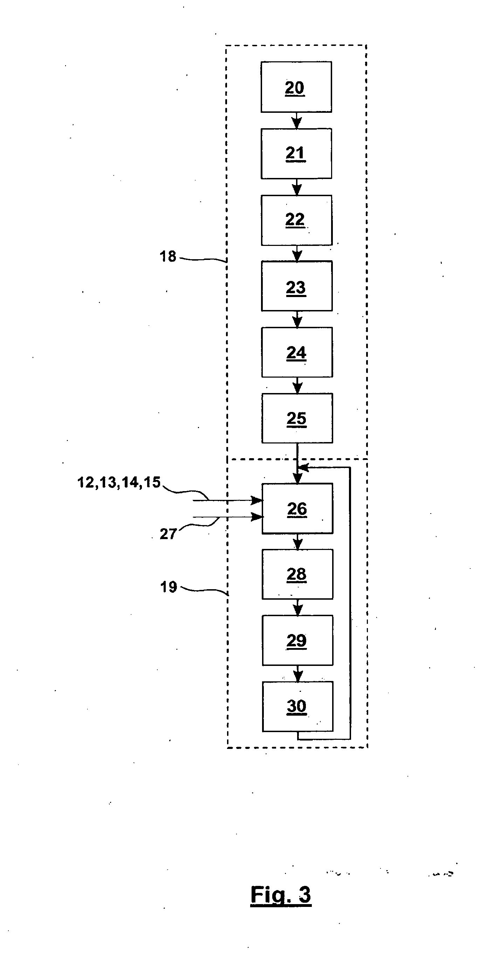

Eine beispielhafte Inbetriebnahme 18 eines erfindungsgemäßen Warenpräsentationssystems 1 sowie ein beispielhafter Betrieb 19 des Warenpräsentationssystems 1 wird anhand des schematischen Ablaufdiagramms gemäß **Fig. 3** erläutert:
Für den späteren Betrieb 19 z. B. der Warenpräsentationseinheit 2a des Warenpräsentationssystems 1 gemäß Fig. 1 muss sichergestellt werden, dass von dem Bildschirm-Steuergerät 5a diejenigen Warenverkauf-Informationssignale 13, 14, 15, die dem Fernseher 4a zugeordnet sind, aus den von dem Server 6 bereitgestellten Warenverkauf-Informationssignalen ausgewählt werden. So wird gewährleistet, dass die dem Fernseher 4a zugeordneten Warenverkauf-Informationen in dem Bildschirm-Signal 11 für den Fernseher 4a enthalten sind, während die Warenverkauf-Informationssignale für die anderen Fernseher 4b, 4c bei dem Erzeugen des Bildschirm-Signals 11 für den Fernseher 4a nicht berücksichtigt werden. Daher erfolgt bei der Inbetriebnahme 18 in Verfahrensschritten 20 bis 25 eine Zuordnung, welcher Fernseher 4a, 4b, 4c mit welchem Bildschirm-Steuergerät 5a, 5b, 5c verbunden ist.

Wenn die in Fig. 1 dargestellte Warenpräsentationseinheit 2a in Betrieb genommen werden soll, wird zunächst in einem Verfahrensschritt 20 das Bildschirm-Steuergerät 5a der Warenpräsentationseinheit 2a mit dem Fernseher 4a verbunden.

In dem Verfahrensschritt 21 wird die Steuergerät-Kennzeichnung 17 des Bildschirm-Steuergeräts 5a auf dem mit dem Bildschirm-Steuergerät 5a verbundenen Fernseher 4a angezeigt. Insbesondere wird die Steuergerät-Kennzeichnung 17 nach dem Verbinden automatisch über den Fernseher 4a ausgegeben. Z. B. wird die Steuergerät-Kennzeichnung 17 des Bildschirm-Steuergeräts 5a wie in Fig. 2 als Teil eines QR-Codes 16 ausgegeben.

In dem Verfahrensschritt 22 wird die Steuergerät-Kennzeichnung 17 erfasst. Beispielsweise wird die von dem Fernseher 4a ausgegebene Steuergerät-Kennzeichnung 17 in ein Smartphone 45 eingegeben. Wenn die Steuergerät-Kennzeichnung 17 als QR-Code 16 angezeigt wird, kann der QR-Code 16 auch mit einem Smartphone 45 eingelesen werden. Der eingelesene QR-Code 16 kann dann automatisch oder unter Nutzung einer dafür vorgesehenen Anwendung dekodiert werden, womit dann die in dem QR-Code 16 enthaltene Steuergerät-Kennzeichnung 17 ermittelt wird.

Nach dem Erfassen der Steuergerät-Kennzeichnung 17 wird in dem Verfahrensschritt 23 eine Verbindung 46 zu dem über die Steuergerät-Kennzeichnung 17 individualisierten Bildschirm-Steuergerät 5a aufgebaut, was über den Server 6 oder unmittelbar über das Bildschirm-Steuergerät 5a erfolgen kann. Insbesondere kann die Kommunikation zwischen dem Smartphone 45 und dem Bildschirm-Steuergerät 5a über eine WLAN-Verbindung erfolgen.

In dem Verfahrensschritt 24 wird die Waren-Kennzeichnung des Fernsehers 4a erfasst. Die Waren-Kennzeichnung kann ebenfalls ein QR-Code oder Barcode (EAN) sein, der z. B. auf einem Schild an dem Fernseher 4a angeordnet ist. Der QR-Code oder Barcode für die Waren-Kennzeichnung kann dann wie der QR-Code 16 mit der Steuergerät-Kennzeichnung 17 mit dem Smartphone 45 eingelesen werden. Um lediglich zwei weitere nicht beschränkende Beispiele zu nennen kann die Waren-Kennzeichnung auch eine Ziffernfolge sein, die in das Smartphone 45 eingegeben wird, oder ein automatisch erfasster Barcode sein.

In dem Verfahrensschritt 25 wird die erfasste Waren-Kennzeichnung an das Bildschirm-Steuergerät 5a übermittelt, was über den Server 6 oder unmittelbar über das Bildschirm-Steuergerät 5a erfolgen kann. Die Waren-Kennzeichnung wird dann z. B. in einem Speicher des Bildschirm-Steuergeräts 5a gespeichert. Durch das Hinterlegen der Waren-Kennzeichnung des Fernsehers 4a in dem Bildschirm-Steuergerät 5a kann sichergestellt werden, dass aus den Warenverkauf-Informationssignalen nur die Warenverkauf-Informationssignale 13, 14, 15 für den Fernseher 4a zur Erzeugung des Bildschirm-Signals 11 verwendet werden. Nach dem Übermitteln der Waren-Kennzeichnung an das Bildschirm-Steuergerät 5a kann die Verbindung 46 mit dem Bildschirm-Steuergerät 5a automatisch unterbrochen werden.

Die Inbetriebnahme 18 der in Fig. 1 dargestellten weiteren Warenpräsentationseinheiten 2b und 2c kann analog zu der zuvor beschriebenen Vorgehensweise gemäß den Verfahrensschritten 20 bis 25 erfolgen. Insbesondere kann die bereits in Betrieb genommene Warenpräsentationseinheit 2a während der Inbetriebnahme 18 der Warenpräsentationseinheiten 2b, 2c (oder während anderweitigen Veränderungen der Warenpräsentationseinheiten 2b, 2c) bereits zur Präsentation des Fernsehers 4a eingesetzt werden, ohne dass die Ausgabe des Bildschirm-Signals 11 über den Fernseher 4a unterbrochen werden muss. Nach erfolgter Inbetriebnahme 18 der Warenpräsentationseinheiten 2a, 2b, 2c ist dann jedem Fernseher 4a, 4b, 4c eines der Bildschirm-Steuergeräte 5a, 5b, 5c zugeordnet, wobei in jedem Bildschirm-Steuergerät 5a, 5b, 5c die Waren-Kennzeichnung des Fernsehers 4a, 4b, 4c hinterlegt ist, der mit dem jeweiligen Bildschirm-Steuergerät 5a, 5b, 5c verbunden ist.

In dem Betrieb 19 der Warenpräsentationseinheit 2a des Warenpräsentationssystems 1 empfängt das Bildschirm-Steuergerät 5a in einem Verfahrensschritt 26 Daten hinsichtlich des Videosignals 12 sowie Daten hinsichtlich der Warenverkauf-Informationssignale 13, 14, 15 für den Fernseher 4a und ggf. Warenverkauf-Informationssignale für die Fernseher 4b, 4c und/oder für weitere Waren. Insbesondere kann das Bildschirm-Steuergerät 5a die Daten hinsichtlich des Videosignals 12 sowie die Daten hinsichtlich der Warenverkauf-Informationssignale gleichzeitig empfangen. Beispielsweise kann das Bildschirm-Steuergerät 5a gleichzeitig oder nacheinander Datenpakete hinsichtlich des Videosignals 12 und mit den jeweiligen Waren-Kennzeichnungen gekennzeichnete Datenpakete hinsichtlich der Warenverkauf-Informationssignale empfangen, ohne dass es zu einer Unterbrechung des Erzeugens und des Ausgebens des Bildschirm-Signals 11 kommt.

Falls während des Empfangs der Daten hinsichtlich des Videosignals 12 und hinsichtlich der Warenverkauf-Informationssignale eine Änderung 27 z. B. der in dem Warenwirtschaftssystem 8 hinterlegten Daten hinsichtlich des Warenverkauf-Informationssignals 13 vorgenommen wird, wie eine Anpassung des darin enthaltenen Preises des Fernsehers 4a, werden die angepassten Daten u. U. automatisch auf den Server 6 übertragen. Nach dem Übertragen der angepassten Daten auf den Server 6 werden somit statt der zuvor bereitgestellten, nicht mehr aktuellen Daten hinsichtlich des Warenverkauf-Informationssignals 13 die aktualisierten Daten von dem Server 6 bereitgestellt und von dem Bildschirm-Steuergerät 5a zusammen mit den gleichzeitig empfangenen Daten hinsichtlich des Videosignals 12 zum Erzeugen des Bildschirm-Signals 11 verwendet. Somit kann trotz der Änderung 27 der Daten hinsichtlich des Warenverkauf-Informationssignals 13 ein unterbrechungsfreies Erzeugen, Übertragen und Ausgeben des Bildschirm-Signals 11 gewährleistet werden. Insbesondere hat die Änderung 27 der Daten nicht zur Folge, dass der Betrieb der Warenpräsentationseinheit 2a für eine Neukonfiguration des Bildschirm-Steuergeräts 4a, nach deren Abschluss erst die aktualisierten Daten für die Erzeugung des Bildschirm-Signals 11 berücksichtigt werden, unterbrochen werden muss.

Aus den empfangenen Daten hinsichtlich der Warenverkauf-Informationssignale wählt das Bildschirm-Steuergerät 5a in einem Verfahrensschritt 28 anhand der in dem Bildschirm-Steuergerät 5a hinterlegten Waren-Kennzeichnung diejenigen Daten aus, die über die dem Datenpaket zugeordnete Waren-Kennzeichnung dem Fernseher 4a zugeordnet sind. Es kann bereits beim Empfang der Daten eine Selektion anhand der in dem Bildschirm-Steuergerät 5a hinterlegten Waren-Kennzeichnung erfolgen, so dass nur aus den selektierten Daten die Warenverkauf-Informationssignale 13, 14, 15 für den Fernseher 4a generiert werden. Es kann aber auch vorgesehen sein, dass aus allen empfangenen Daten hinsichtlich der Warenverkauf-Informationssignale die entsprechenden Warenverkauf-Informationssignale generiert werden und erst nach dem Erzeugen der Warenverkauf-Informationssignale diejenigen Warenverkauf-Informationssignale 13, 14, 15 selektiert werden, die mit der in dem Bildschirm-Steuergerät 5a hinterlegten Waren-Kennzeichnung gekennzeichnet sind.

In einem Verfahrensschritt 29 wird mittels Steuerlogik des Bildschirm-Steuergeräts 5a aus dem Videosignal 12 und den ausgewählten Warenverkauf-Informationssignalen 13, 14, 15 das Bildschirm-Signal 11 erzeugt, in dem die dem Fernseher 4a zugeordneten Warenverkauf-Informationssignale 13, 14, 15 dem Videosignal 12 überlagert sind. Die anderen Warenverkauf-Informationssignale, die nicht mit der in dem Bildschirm-Steuergerät 5a hinterlegten Waren-Kennzeichnung gekennzeichnet sind, werden hingegen nicht bei der Erzeugung des Bildschirm-Signals 11 berücksichtigt.

Mit dem so erzeugten Bildschirm-Signal 11 wird schließlich in einem Verfahrensschritt 30 der mit dem Bildschirm-Steuergerät 5a verbundene Fernseher 4a versorgt. Der Fernseher 4a gibt dann das Bildschirm-Signal 11 mit dem darin enthaltenen Videosignal 12 und den für den Fernseher 4a vorgesehenen Warenverkauf-Informationssignalen 13, 14, 15 aus.

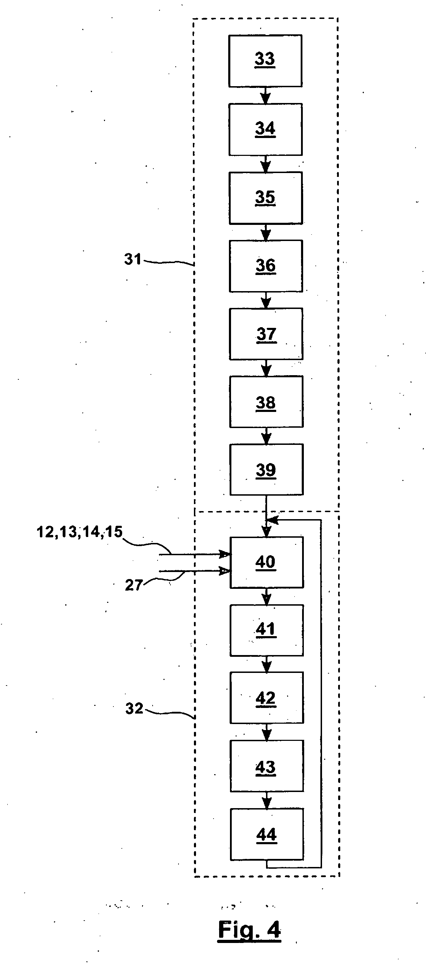

Ein Beispiel für eine alternative Inbetriebnahme 31 eines erfindungsgemäßen Warenpräsentationssystems 1 und einen alternativer Betrieb 32 des Warenpräsentationssystems 1 wird anhand des Ablaufdiagramms gemäß **Fig. 4** erläutert:
Bei der in Fig. 4 dargestellten Inbetriebnahme 31 wird zunächst in einem Verfahrenschritt 33 das Bildschirm-Steuergerät 5a der Warenpräsentationseinheit 2a des Warenpräsentationssystems 1 gemäß Fig. 1 mit dem Fernseher 4a verbunden.

Zum Zuordnen des Bildschirm-Steuergeräts 5a, 5b, 5c zu dem Fernseher 4a, 4b, 4c wird in einem Verfahrensschritt 34 (analog zu dem Verfahrensschritt 21) die Steuergerät-Kennzeichnung 17 des Bildschirm-Steuergeräts 5a von dem Fernseher 4a ausgegeben.

In einem Verfahrensschritt 35 wird (analog zu dem Verfahrensschritt 22) die ausgegebene Steuergerät-Kennzeichnung 17 erfasst. Z. B. wird die Steuergerät-Kennzeichnung 17 als Teil eines QR-Codes 16 von dem Fernseher 4a ausgegeben, der mit einem Smartphone 45 erfasst wird. Die erfasste Steuergerät-Kennzeichnung 17 wird in einem Speicher zwischengespeichert, z. B. in einem Speicher des Smartphones 45.

In einem Verfahrensschritt 36 wird analog zu dem Verfahrensschritt 24 die Waren-Kennzeichnung des Fernsehers 4a erfasst. Die erfasste Waren-Kennzeichnung wird in dem Speicher zwischengespeichert.

In einem Verfahrensschritt 37 wird der erfassten Waren-Kennzeichnung der Fernsehers 4a die zuvor erfasste Steuergerät-Kennzeichnung 17 des Bildschirm-Steuergeräts 5a zugeordnet und eine entsprechende Zuordnungsvorschrift erstellt. Diese Zuordnungsvorschrift ordnet einer Waren-Kennzeichnung eine Steuergerät-Kennzeichnung 17 (oder umgekehrt) zu.

Optional kann ein Verfahrensschritt 38 vorgesehen sein, in dem die erstellte Zuordnungsvorschrift durch eine Eingabe bestätigt werden muss.

Nach dem Erstellen bzw. nach dem Bestätigen der erstellten Zuordnungsvorschrift wird die Zuordnungsvorschrift in einem Verfahrensschritt 39 auf den Server 6 übertragen und dort hinterlegt. Nach dem Hinterlegen der Zuordnungsvorschrift, über den dem Fernseher 4a das Bildschirm-Steuergerät 5a zugeordnet ist, können weitere Warenpräsentationseinheiten des Warenpräsentationssystems 1 in Betrieb genommen und weitere Zuordnungsvorschriften auf dem Server 6 hinterlegt werden.

Beispielsweise sind nach erfolgter Inbetriebnahme 31 der Warenpräsentationseinheiten 2a, 2b, 2c aus Fig. 1 auf dem Server 6 die Zuordnungsvorschriften hinterlegt, über die jedem Fernseher 4a, 4b, 4c ein Bildschirm-Steuergerät 5a, 5b, 5c zugeordnet ist.

In dem Betrieb 32 der Warenpräsentationseinheit 2a des Warenpräsentationssystems 1 werden die Daten hinsichtlich der Warenverkauf-Informationssignale 13, 14, 15, welche dem mit dem Bildschirm-Steuergerät 5a verbundenen Fernseher 4a zugeordnet sind, in einem Verfahrensschritt 40 anhand der auf dem Server 6 hinterlegten Zuordnungsvorschrift mit der Steuergerät-Kennzeichnung 17 gekennzeichnet. Die derart gekennzeichneten Daten hinsichtlich der Warenverkauf-Informationssignale 13, 14, 15 werden dann neben anderen Daten hinsichtlich anderer Warenverkauf-Informationssignale, die mit anderen Steuergerät-Kennzeichnungen gekennzeichnet sind, von dem Server 6 bereitgestellt.

In einem Verfahrensschritt 41 empfängt das Bildschirm-Steuergerät 5a die Daten hinsichtlich des Videosignals 12 sowie u. a. die Daten hinsichtlich der Warenverkauf-Informationssignale 13, 14, 15, die mit der Steuergerät-Kennzeichnung 17 des Bildschirm-Steuergeräts 5a gekennzeichnet sind.

In einem Verfahrensschritt 42 werden anhand der Steuergerät-Kennzeichnung 17 aus den von dem Server bereitgestellten Daten hinsichtlich der Warenverkauf-Informationssignale die Daten ausgewählt, die mit der Steuergerät-Kennzeichnung 17 gekennzeichnet sind. Aus diesen Daten werden dann die Warenverkauf-Informationssignale 13, 14, 15 erzeugt.

In einem Verfahrensschritt 43 wird aus den ausgewählten Warenverkauf-Informationssignalen 13, 14, 15 und dem Videosignal 12 das Bildschirm-Signal 11 erzeugt.

Das derart erzeugte Bildschirm-Signal 11 wird schließlich in einem Verfahrensschritt 44 von dem mit dem Bildschirm-Steuergerät 5a verbundenen Fernseher 4a ausgegeben.

Der Begriff "Bildschirm-Signal" umfasst sowohl ein elektrisches Signal, mit dem eine Ware von einem Bildschirm-Steuergerät versorgt wird, als auch ein Bild, das auf dem Bildschirm der Ware ausgegeben wird. Gleichermaßen wird unter den Begriffen "Videosignal", "Fernsehkanalsignal" und "Warenverkauf-Informationssignal" sowohl ein elektrisches Signal als auch ein Videobild, ein Bild eines Fernsehkanals bzw. ein Bild zu Warenverkauf-Informationen verstanden.

### BEZUGSZEICHENLISTE

- 1: Warenpräsentationssystem
- 2: Warenpräsentationseinheit
- 3: Waren
- 4: Fernseher
- 5: Bildschirm-Steuergerät
- 6: Server
- 7: Netzwerk- oder Internet-Anschluss
- 8: Warenwirtschaftssystem
- 9: Kabel
- 10: Kabel
- 11: Bildschirm-Signal
- 12: Videosignal
- 13: Warenverkauf-Informationssignal
- 14: Warenverkauf-Informationssignal
- 15: Warenverkauf-Informationssignal
- 16: QR-Code
- 17: Steuergerät-Kennzeichnung
- 18: Inbetriebnahme
- 19: Betrieb
- 20: Verfahrensschritt
- 21: Verfahrensschritt
- 22: Verfahrensschritt
- 23: Verfahrensschritt
- 24: Verfahrensschritt
- 25: Verfahrensschritt
- 26: Verfahrensschritt
- 27: Änderung
- 28: Verfahrensschritt
- 29: Verfahrensschritt
- 30: Verfahrensschritt
- 31: Inbetriebnahme
- 32: Betrieb
- 33: Verfahrensschritt
- 34: Verfahrensschritt
- 35: Verfahrensschritt
- 36: Verfahrensschritt
- 37: Verfahrensschritt
- 38: Verfahrensschritt
- 39: Verfahrensschritt
- 40: Verfahrensschritt
- 41: Verfahrensschritt
- 42: Verfahrensschritt
- 43: Verfahrensschritt
- 44: Verfahrensschritt
- 45: Smartphone
- 46: Verbindung
- 47: Verbindung

## Patentansprüche

1. Warenpräsentationssystem (1) mit
a) einer mit einem Bildschirm ausgestatteten Ware (3) und
b) einem Bildschirm-Steuergerät (5) mit Steuerlogik zur Erzeugung eines Bildschirm-Signals (11), in welchem ein Videosignal (12) mit einem Warenverkauf-Informationssignal (13, 14, 15) überlagert ist,
c) wobei das Bildschirm-Steuergerät (5) ein der an dem Bildschirm-Steuergerät (5) angeschlossenen Ware (3) zugeordnetes Warenverkauf-Informationssignal (13, 14, 15) auswählt und dazu ausgebildet ist, dieses Warenverkauf-Informationssignal (13, 14, 15) für die Erzeugung des Bildschirm-Signals (11) zu verwenden,
**dadurch gekennzeichnet, dass**
d) das Bildschirm-Steuergerät (5) eingerichtet ist, das Bildschirm-Signal derart zu erzeugen, dass eine Änderung der Daten hinsichtlich des Warenverkaufs-Informationssignals (13, 14, 15) unmittelbar bei der Erzeugung des Bildschirm-Signals (11) erfolgt, ohne dass es dabei zu einer Unterbrechung der Ausgabe des Bildschirm-Signals (11) kommt, und
e) das Bildschirm-Steuergerät (5) mit Steuerlogik ausgestattet ist, welche in dem Bildschirm-Signal (11) eine das Bildschirm-Steuergerät (5) individualisierende Steuergerät-Kennzeichnung (17) erzeugt, welche ein Barcode oder QR-Code (16) ist.

2. Warenpräsentationssystem (1) nach Anspruch 1, **dadurch gekennzeichnet, dass** das Bildschirm-Steuergerät (5) mit einer einzigen mit einem Bildschirm ausgestatteten Ware (3) verbunden ist zur individuellen Versorgung der mit dem Bildschirm ausgestatteten Ware (3) mit dem Bildschirm-Signal (11).

3. Warenpräsentationssystem (1) nach Anspruch 2, **dadurch gekennzeichnet, dass** das Bildschirm-Steuergerät (5) an der mit dem Bildschirm ausgestatteten Ware (3) befestigt ist.

4. Warenpräsentationssystem (1) nach einem der Ansprüche 1 bis 3, **dadurch gekennzeichnet, dass** das Bildschirm-Steuergerät (5) über einen Netzwerk- oder Internet-Anschluss (7) verfügt, über welchen dieses mit Daten hinsichtlich des Videosignals (12) und/oder des Warenverkauf-Informationssignals (12, 13, 14) versorgt werden kann.

5. Warenpräsentationssystem (1) nach Anspruch 4, **dadurch gekennzeichnet, dass** das Bildschirm-Steuergerät (5) über Steuerlogik verfügt, welche in Abhängigkeit der über einen einzigen Netzwerk- oder Internet-Anschluss (7) empfangenen Daten sowohl das Videosignal (12) als auch das Warenverkauf-Informationssignal (13, 14, 15) erzeugt.

6. Warenpräsentationssystem (1) nach einem der vorhergehenden Ansprüche, **dadurch gekennzeichnet, dass** durch einen Server Daten hinsichtlich des Videosignals (12) und/oder des Warenverkauf-Informationssignals (13, 14, 15) bereitgestellt werden, wobei das Bildschirm-Steuergerät (5) mit dem Server (6) verbunden ist.

7. Warenpräsentationssystem (1) nach Anspruch 6, **dadurch gekennzeichnet, dass** der Server (6) Steuerlogik aufweist, welche Daten hinsichtlich Warenverkauf-Informationssignalen für unterschiedliche Waren (3) unterschiedliche Waren-Kennzeichnungen zuordnet, wobei das Bildschirm-Steuergerät (5) die der Waren-Kennzeichnung der an dem Bildschirm-Steuergerät (5) angeschlossenen Ware (3) zugeordneten Daten hinsichtlich des Warenverkauf-Informationssignals (13, 14, 15) auswählt und das daraus erzeugte Warenverkauf-Informationssignal (13, 14, 15) für die Erzeugung des Bildschirm-Signals (11) verwendet.

8. Warenpräsentationssystem (1) nach Anspruch 6, **dadurch gekennzeichnet, dass** der Server (6) Steuerlogik aufweist, welche Daten hinsichtlich Warenverkauf-Informationssignalen für unterschiedliche Waren (3) unterschiedliche Steuergerät-Kennzeichnungen (17) zuordnet, wobei das Bildschirm-Steuergerät (5) die seiner Steuergerät-Kennzeichnung (17) zugeordneten Daten hinsichtlich des Warenverkauf-Informationssignals (13, 14, 15) auswählt und das daraus erzeugte Warenverkauf-Informationssignal (13, 14, 15) für die Erzeugung des Bildschirm-Signals (11) verwendet.

9. Warenpräsentationssystem (1) nach einem der Ansprüche 6 bis 8, **dadurch gekennzeichnet, dass** der Server (6) zum Übertragen von Daten hinsichtlich der Warenverkauf-Informationssignale (13, 14, 15) auf den Server (6) mit einer Datenbank oder einem Warenwirtschaftssystem (8) verbunden ist, in der oder dem Daten hinsichtlich der Warenverkauf-Informationssignale (13, 14, 15) gespeichert sind.

10. Warenpräsentationssystem (1) nach Anspruch 9, **dadurch gekennzeichnet, dass** das Übertragen von Daten hinsichtlich der Warenverkauf-Informationssignale (13, 14, 15) von der Datenbank oder dem Warenwirtschaftssystem (8) auf den Server (6) zu vorgegeben Zeitpunkten erfolgt.

11. Warenpräsentationssystem (1) nach einem der vorhergehenden Ansprüche, **dadurch gekennzeichnet, dass** das Bildschirm-Steuergerät (6) in einen Betriebszustand schaltbar ist, in dem das Bildschirm-Signal (11) das Videosignal (12) ohne Überlagerung des Warenverkauf-Informationssignals (13, 14, 15) ist.

12. Warenpräsentationssystem (1) nach einem der vorhergehenden Ansprüche, **dadurch gekennzeichnet, dass** das Bildschirm-Steuergerät (5) über Steuerlogik verfügt, welche dem Videosignal (12)
a) eine Anzahl der zum Verkauf verfügbaren Waren (3),
b) einen Internet-Link zu einer Website für ein Online-Verkaufsportal,
c) einen Internet-Link zu einer Kommunikationsplattform und/oder
d) Informationen zu einem Kommunikationsaufbau zu einem Smartphone (45) überlagert.

13. Warenpräsentationssystem (1) nach einem der vorhergehenden Ansprüche, **dadurch gekennzeichnet, dass** das Bildschirm-Steuergerät (5) über Steuerlogik verfügt, welche dem Videosignal (12) einen QR-Code (16) überlagert, welcher
a) einerseits
aa) einen Internet-Link zu einer Website für ein Online-Verkaufsportal und/oder
ab) einen Internet-Link zu einer Kommunikationsplattform und/oder
ac) Informationen zu einem Kommunikationsaufbau zu einem Smartphone (45) beinhaltet und
b) andererseits die das Bildschirm-Steuergerät (5) individualisierende Steuergerät-Kennzeichnung (17) beinhaltet.

14. Verfahren zur Inbetriebnahme (18, 31) und zum Betrieb (19, 32) eines Warenpräsentationssystems (1) nach einem der vorhergehenden Ansprüche, **gekennzeichnet durch** folgende Verfahrensschritte:
a) Verbinden eines Bildschirm-Steuergeräts (5) mit einer mit einem Bildschirm ausgestatteten Ware (3),
b) Anzeigen einer das Bildschirm-Steuergerät (5) individualisierenden Steuergerät-Kennzeichnung (17), welche ein Barcode oder ein QR-Code (16) ist, an dem Bildschirm der Ware (3), die mit dem Bildschirm-Steuergerät (5) verbunden ist,
c) Erfassen der angezeigten, das Bildschirm-Steuergerät (5) individualisierenden Steuergerät-Kennzeichnung (17),
d) Erfassen einer die Ware (3) individualisierenden Waren-Kennzeichnung,
e) entweder
ea) Übermitteln der die Ware (3) individualisierenden Waren-Kennzeichnung an das über die Steuergerät-Kennzeichnung (17) identifizierte Bildschirm-Steuergerät (5) und
eb) Erzeugen eines Bildschirm-Signals (11), in welchem ein Videosignal (12) mit einem Warenverkauf-Informationssignal (13, 14, 15) überlagert ist, wobei das Warenverkauf-Informationssignal (13, 14, 15) von der übermittelten, die Ware (3) individualisierenden Waren-Kennzeichnung abhängig ist,
f) oder
fa) Erstellen einer Zuordnungsvorschrift, die eine Steuergerät-Kennzeichnung (17) einer Waren-Kennzeichnung zuordnet und anhand welcher Daten hinsichtlich des Warenverkauf-Informationssignals (13, 14, 15) mit einer Steuergerät-Kennzeichnung (17) gekennzeichnet werden,
fb) Erzeugen eines Warenverkauf-Informationssignals (13, 14, 15) **durch** das Bildschirm-Steuergerät (5) aus den mit der zugehörigen Steuergerät-Kennzeichnung (17) gekennzeichneten Daten hinsichtlich des Warenverkauf-Informationssignals (13, 14, 15) und
fc) Erzeugen eines Bildschirm-Signals (11), in welchem ein Videosignal (12) mit dem erzeugten Warenverkauf-Informationssignal (13, 14, 15) überlagert ist.

15. Verfahren zur Inbetriebnahme (18, 31) nach Anspruch 14, **dadurch gekennzeichnet, dass** ein Auslösesignal erfasst wird und in Reaktion auf das Auslösesignal für eine vorgegebene Zeitspanne die Steuergerät-Kennzeichnung (17) in Form eines Barcodes oder eines QR-Codes (16) an dem Bildschirm angezeigt wird.

## Claims

1. Product presentation system (1) with
a) a product (3) equipped with a display and
b) a display control device (5) with control logic for creating a display signal (11) in which a video signal (12) is superimposed with a product sale information signal (13, 14, 15),
c) where the display control device (5) selects a product sale information signal (13, 14, 15) related to the product (3) connected to the display control device (5) and where the display control device (5) is designed and configured to use this product sale information signal (13, 14, 15) for generating the display signal (11),
**characterised in that**
d) the display control device (5) is set up to generate the display signal in such a way that a modification of the data with respect to the product sale information signal (13, 14, 15) is carried out directly upon the generation of the display signal (11) without there being an interruption of the output of the display signal (11) and
e) the display control device (5) is equipped with control logic, which generates a control device identification (17) individualising the display control device (5) within the display signal (11), where the control device identification (17) is a bar code or QR code (16).

2. Product presentation system (1) according to claim 1, **characterised in that** the display control device (5) is connected to a single product (3) equipped with a display for an individual supply with the display signal (11) of the product (3) equipped with the display.

3. Product presentation system (1) according to claim 2, **characterised in that** the display control device (5) is attached to the product (3) equipped with the display.

4. Product presentation system (1) according to one of the claims 1 to 3, **characterised in that** the display control device (5) has a network connection or internet connection (7) through which it can be supplied with data with respect to the video signal (12) and/or the product sale information signal (12, 13, 14).

5. Product presentation system (1) according to claim 4, **characterised in that** the display control device (5) has control logic which generates the video signal (12) as well as the product sale information signal (13, 14, 15) in dependence of the data received through a single network connection or internet connection (7).

6. Product presentation system (1) according to one of the preceding claims, **characterised in that** data with respect to the video signal (12) and/or the product sale information signal (13, 14, 15) are provided by a server (6), while the display control device (5) is connected to the server (6).

7. Product presentation system (1) according to claim 6, **characterised in that** the server (6) has control logic which assigns different product identifications to data with respect to product sale information signals for different products (3), where the display control device (5) selects the data assigned to the product identification of the product (3) connected to the display control device (5) with respect to the product sale information signal (13, 14, 15) and uses the product sale information signal (13, 14, 15) generated from this for generating the display signal (11).

8. Product presentation system (1) according to claim 6, **characterised in that** the server (6) has control logic which assigns different control device identifications (17) to data with respect to product sale information signals for different products (3), where the display control device (5) selects the data assigned to its control device identification (17) with respect to the product sale information signal (13, 14, 15) and uses the product sale information signal (13, 14, 15) generated from this for generating the display signal (11).

9. Product presentation system (1) according to one of the claims 6 to 8, **characterised in that** the server (6) is connected to a data base or a product management system (8) for transmitting of data with respect to the product sale information signals (13, 14, 15) to the server (6), where in the data base or product management system (8) data with respect to the product sale information signals (13, 14, 15) are stored.

10. Product presentation system (1) according to claim 9, **characterised in that** the transmission of data with respect to the product sale information signals (13, 14, 15) from the data base or the product management system (8) to the server (6) occurs at prescribed points in time.

11. Product presentation system (1) according to one of the preceding claims, **characterised in that** the display control device (6) can be switched into an operational mode in which the display signal (11) is the video signal (12) without superposition of the product sale information signal (13, 14, 15).

12. Product presentation system (1) according to one of the preceding claims, **characterised in that** the display control device (5) has control logic which superimposes on the video signal (12)
a) a number of the products (3) available for sale,
b) an internet link to a website for an online sales portal,
c) an internet link to a communication platform and/or
d) information to establishing communication with a smartphone (45).

13. Product presentation system (1) according to one of the preceding claims, **characterised in that** the display control device (5) has control logic which superimposes a QR code (16) on the video signal (12), which
a) on the one hand contains
aa) an internet link to a website for an online sales portal and/or
ab) an internet link to a communication platform and/or
ac) information to establishing communication with a smartphone (45)
and
b) on the other hand contains the control device identification (17) individualising the display control device (5).

14. Method for the startup (18, 31) and operation (19, 32) of a product presentation system (1) according to one of the preceding claims, **characterised by** the following method steps:
a) connecting a display control device (5) with a product (3) equipped with a display,
b) displaying a control device identification (17) individualising the display control device (5) on the display of the product (3) which is connected to the display control device (5), where the control device identification (17) is a bar code or a QR code (16),
c) registering the control device identification (17) displayed individualising the display control device (5),
d) registering a product identification individualising the product (3),
e) either
ea) transmitting the product identification individualising the product (3) to the display control device (5) identified through the control device identification (17) and
eb) generating a display signal (11) in which a video signal (12) is superimposed with a product sales information signal (13, 14, 15), where the product sales information signal (13, 14, 15) is dependent on the transmitted product identification individualising the product (3),
f) or
fa) establishing an assignation rule which assigns a control device identification (17) to a product identification and according to which data with respect to the product sales information signal (13, 14, 15) are marked with a control device identification (17),
fb) generating a product sales information signal (13, 14, 15) by the display control device (5) from the data marked with the associated control device identification (17) with respect to the product sales information signal (13, 14, 15) and
fc) generating a display signal (11) in which a video signal (12) is superimposed with the product sales information signal (13, 14, 15) generated.

15. Method for startup (18, 31) according to claim 14, **characterised in that** a trigger signal is registered and in reaction to the trigger signal the control device identification (17) in the form of a bar code or a QR code (16) is shown on the display for a prescribed time intervall.

## Revendications

1. Système de présentation de marchandises (1) comportant
a) un produit (3) équipé d'un écran,
b) un dispositif de commande d'écran (5) avec une logique de commande pour générer un signal d'écran (11), dans lequel un signal d'information de vente de produit (13, 14, 15) est superposé à un signal vidéo (12),
c) le dispositif de commande d'écran (5) sélectionnant un signal d'information de vente de produit (13, 14, 15) associé à un produit (3) raccordé au dispositif de commande d'écran (5) et étant configuré pour utiliser ledit signal d'information de vente de produit (13, 14, 15) afin de générer le signal d'écran (11),
**caractérisé en ce que**
d) le dispositif de commande d'écran (5) est configuré pour générer le signal d'écran de telle sorte qu'une modification des données relatives au signal d'information de vente de produit (13, 14, 15) est effectuée directement lors de la génération du signal d'écran (11) sans que se produise une interruption de l'émission du signal d'écran (11), et
e) le dispositif de commande d'écran (5) est équipé d'une logique de commande qui, dans le signal d'écran (11), génère un identificateur de dispositif de commande (17), qui est un code-barres ou un code QR (16) et individualise un dispositif de commande d'écran (5).

2. Système de présentation de marchandises (1) selon la revendication 1, **caractérisé en ce que** le dispositif de commande d'écran (5) est relié à un seul produit (3) équipé d'un écran en vue de fournir individuellement le signal d'écran (11) au produit (3) équipé de l'écran.

3. Système de présentation de marchandises (1) selon la revendication 2, **caractérisé en ce que** le dispositif de commande d'écran (5) est fixé au produit (3) équipé d'un écran.

4. Système de présentation de marchandises (1) selon l'une quelconque des revendications 1 à 3, **caractérisé en ce que** le dispositif de commande d'écran (5) dispose d'un raccordement au réseau ou à Internet (7), par l'intermédiaire duquel ledit dispositif de commande d'écran peut recevoir des données concernant le signal vidéo (12) et/ou le signal d'information de vente de produit (12, 13, 14).

5. Système de présentation de marchandises (1) selon la revendication 4, **caractérisé en ce que** le dispositif de commande d'écran (5) dispose d'une logique de commande qui, en fonction des données reçues via un raccordement au réseau ou à Internet (7), génère le signal vidéo (12), de même que le signal d'information de vente de produit (13, 14, 15).

6. Système de présentation de marchandises (1) selon l'une quelconque des revendications précédentes, **caractérisé en ce que** des données relatives au signal vidéo (12) et/ou au signal d'information de vente de produit (13, 14, 15) sont mises à disposition par l'intermédiaire d'un serveur, le dispositif de commande d'écran (5) étant relié au serveur (6).

7. Système de présentation de marchandises (1) selon la revendication 6, **caractérisé en ce que** le serveur (6) comporte une logique de commande qui attribue différents identificateurs de produits aux données relatives à des signaux d'information de vente de produit (13, 14, 15) pour différents produits (3), le dispositif de commande d'écran (5) sélectionnant les données associées à l'identificateur du produit (3) raccordé au dispositif de commande d'écran (5) et utilisant le signal d'information de vente de produit (13, 14, 15) généré à partir desdites données pour produire le signal d'écran (11).

8. Système de présentation de marchandises (1) selon la revendication 6, **caractérisé en ce que** le serveur (6) comporte une logique de commande qui attribue différents identificateurs de dispositif de commande (17) aux données relatives à des signaux d'information de vente de produit pour différents produits (3), le dispositif de commande d'écran (5) sélectionnant les données relatives au signal d'information de vente de produit (13, 14, 15) et associées à son identificateur de dispositif de commande (17) et utilisant le signal d'information de vente de produit (13, 14, 15) généré à partir desdites données pour produire le signal d'écran (11).

9. Système de présentation de marchandises (1) selon l'une quelconque des revendications 6 à 8, **caractérisé en ce que**, pour transférer vers le serveur (6) les données relatives aux signaux d'information de vente de produit (13, 14, 15), le serveur (6) est relié à une base de données ou à un système économique de produits (8), dans laquelle ou dans lequel sont stockées les données relatives aux signaux d'information de vente de produit (13, 14, 15).

10. Système de présentation de marchandises (1) selon la revendication 9, **caractérisé en ce que** le transfert des données relatives aux signaux d'information de vente de produit (13, 14, 15) s'effectue depuis la base de données ou le système économique de produits (8) vers le serveur (6) à des instants définis.

11. Système de présentation de marchandises (1) selon l'une quelconque des revendications précédentes, **caractérisé en ce que** le dispositif de commande d'écran (6) peut être activé dans un état de fonctionnement, dans lequel le signal d'écran (11) est le signal vidéo (12) sans superposition du signal d'information de vente de produit (13, 14, 15).

12. Système de présentation de marchandises (1) selon l'une quelconque des revendications précédentes, **caractérisé en ce que** le dispositif de commande d'écran (5) dispose d'une logique de commande qui superpose au signal vidéo (12)
a) un nombre de produits (3) disponibles à la vente,
b) un lien Internet vers une page web pour un portail de vente en ligne,
c) un lien Internet vers une plate-forme de communication, et/ou
d) des informations pour l'établissement d'une communication vers un smartphone (45).

13. Système de présentation de marchandises (1) selon l'une quelconque des revendications précédentes, **caractérisé en ce que** le dispositif de commande d'écran (5) dispose d'une logique de commande qui superpose un code QR (16) au signal vidéo (12), lequel code
a) d'une part, contient
aa) un lien Internet vers une page web pour un portail de vente en ligne, et/ou
ab) un lien Internet vers une plate-forme de communication, et/ou
ac) des informations pour l'établissement d'une communication vers un smartphone (45),
et
b) d'autre part, contient l'identificateur de dispositif de commande (17) qui individualise le dispositif de commande d'écran (5).

14. Procédé permettant la mise en marche (18, 31) et le fonctionnement (19, 32) d'un système de présentation de marchandises (1) selon l'une quelconque des revendications précédentes, **caractérisé par** les étapes suivantes:
a) relier un dispositif de commande d'écran (5) à un produit (3) équipé d'un écran,
b) afficher un identificateur du dispositif de commande (17), qui est un code-barres ou un code QR (16) et qui individualise le dispositif de commande d'écran (5), sur l'écran du produit (3) qui est relié au dispositif de commande d'écran (5),
c) enregistrer l'identificateur de dispositif de commande (17) individualisant le dispositif de commande d'écran (5),
d) enregistrer un identificateur de produit individualisant le produit (3),
e) ou
ea) transmettre l'identificateur de produit individualisant le produit (3) vers le dispositif de commande d'écran (5) identifié par l'identificateur de dispositif de commande (17), et
eb) générer un signal d'écran (11), dans lequel un signal d'information de vente de produit (13, 14, 15) est superposé à un signal vidéo (12), le signal d'information de vente de produit (13, 14, 15) étant fonction de l'identificateur de produit transmis, individualisation le produit (3),
f) ou
fa) établir une directive d'attribution, qui associe un identificateur de dispositif de commande (17) à un identificateur de produit et à l'appui de laquelle des données relatives au signal d'information de vente de produit (13, 14, 15) sont **caractérisées par** un identificateur de dispositif de commande (17),
fb) générer un signal d'information de vente de produit (13, 14, 15) par le dispositif de commande d'écran (5) à partir des données relatives au signal d'information de vente de produit (13, 14, 15) et **caractérisées par** l'identificateur de dispositif de commande (17), et
fc) générer un signal d'écran (11), dans lequel un signal d'information de vente de produit (13, 14, 15) généré est superposé à un signal vidéo (12).

15. Procédé permettant la mise en marche (18, 31) selon la revendication 14, **caractérisé en ce qu'**un signal de déclenchement est détecté et, en réponse au signal de déclenchement, l'identificateur de dispositif de commande (17) est affiché sur l'écran sous la forme d'un code-barres ou d'un code QR (16) pendant un intervalle de temps défini.
